# EUROPÄISCHE PATENTSCHRIFT

(11) **EP 3 348 534 B1**
(45) Veröffentlichungstag und Bekanntmachung des Hinweises auf die Patenterteilung: **26.05.2021**
(21) Anmeldenummer: 17151315.3
(22) Anmeldetag: 13.01.2017
(51) Int. Cl.: C04B 26/06, C04B 26/10, C04B 26/12, C04B 26/14, C04B 26/16, C04B 26/18, C04B 26/32, C04B 28/24, C04B 28/26, C04B 111/28, B29C 44/18

(54) **VERFAHREN ZUM BEFÜLLEN VON HOHLRÄUMEN IN FORMKÖRPERN MIT EINER FÜLLMASSE, DIE EINEN AKTIVIERTEN PHOTOINITIATOR ENTHÄLT**
METHOD FOR FILLING CAVITIES IN MOULDINGS WITH A PASTE THAT COMPRISES AN ACTIVATED PHOTOINITIATOR
PROCÉDÉ DE REMPLISSAGE DE CAVITÉS DANS DES CORPS MOULÉS AVEC UNE PÂTE COMPRENANT UN PHOTOINITIATEUR DANS UN ÉTAT ACTIVÉ

(43) Veröffentlichungstag der Anmeldung: 18.07.2018
(73) Patentinhaber: Interbran Raw Materials GmbH, 69469 Weinheim (DE)
(72) Erfinder: SCHÜMCHEN, Kurt, 53949 Dahlem (DE)
(74) Vertreter: Von Rohr Patentanwälte Partnerschaft mbB

(56) Entgegenhaltungen:
- EP-A1- 1 854 620
- EP-A2- 1 745 901
- EP-A2- 3 020 691
- WO-A1-2006/069411
- WO-A1-2016/116496
- DE-A1-102008 028 508
- DE-A1-102015 117 035
- GUANGJIAN HE ET AL: "A UV-Initiated Reactive Extrusion Process for Production of Controlled-Rheology Polypropylene", POLYMER ENGINEERING AND SCIENCE, BROOKFIELD CENTER, US, vol. 51, no. 1, 1 January 2011 (2011-01-01), pages 151-157, XP002761364, ISSN: 0032-3888, DOI: 10.1002/PEN.21732 [retrieved on 2010-11-04]

## Beschreibung

Die vorliegende Erfindung betrifft das technische Gebiet der Baustoffe, insbesondere der wärmedämmenden Baustoffe.

Insbesondere betrifft die vorliegende Erfindung ein Verfahren zum Befüllen von Hohlräumen, insbesondere zum Befüllen der Hohlräume von Formkörpern, mit einer speziellen Füllmasse.

Bei der Errichtung von Mauerwerken aus Ziegeln werden heutzutage fast ausschließlich Loch- bzw. Hohlziegel verwendet, da diese bei vergleichbaren Tragfähigkeiten eine deutliche Gewichtsreduktion und eine deutlich geringere Wärmeleitfähigkeit, d. h. eine deutlich bessere Wärmedämmung, im Vergleich zu massiven Ziegeln aufweisen.

Im Zuge eines geschärften Umweltbewusstseins sowie immer ständig strengerer gesetzlicher Anforderungen an die Wärmedämmung von Neubauten stoßen reine Ziegelmauerwerke jedoch mittlerweile ohne zusätzliche wärmedämmende Maßnahmen an ihre Grenzen. Um die neuesten Anforderungen der Energieeinsparverordnung (EnEV) zu erfüllen bzw. um einen Passivhausstandard zu erreichen, sind aufwendige wärmedämmende Maßnahmen an der Außenhülle der Gebäude vorzunehmen, welche die Baukosten überproportional steigen lassen.

Zur Verbesserung der Wärmedämmung von Hohlziegeln wurden Systeme entwickelt, bei welchen die Hohlräume der Hohlziegel mit Wärmedämmmaterialien, wie beispielsweise expandiertem Perlit, gefüllt sind. Hierdurch lässt sich eine deutliche Verbesserung der Wärmedämmeigenschaften der Hohlziegel erreichen, jedoch sind diese für modernste Anforderungen oftmals auch nicht mehr ausreichend.

Darüber hinaus sind bei alleiniger Verwendung von Perlit als Füllmaterial einer weiteren Verbesserung der Wärmedämmeigenschaften von Hohlziegeln physikalische Grenzen gesetzt, welche durch eine Schüttung des Perlits einfach nicht überschritten werden können. Des Weiteren ist gleichfalls problematisch, dass bei Verwendung loser (Perlit-)Schüttungen bei einer Beschädigung der Kammern des Hohlziegels das Perlit aus dem Stein herausrieselt, wodurch die verbesserten Wärmedämmeigenschaften verloren gehen. Der Gefahr einer Beschädigung der mit Perlit gefüllten Kammern wird unter anderem dadurch begegnet, dass das Perlit in einem zumeist zementbasierten Bindemittel in die Hohlräume der Hohlziegel eingebracht wird und dort mit Hilfe des Bindemittels fixiert wird. Durch die Verwendung zementbasierter Bindemittel wird jedoch die Wärmeleitfähigkeit des Hohlziegels wieder deutlich erhöht, d. h. die Wärmedämmeigenschaften deutlich verschlechtert, da das Bindemittel im Vergleich zu dem expandierten Perlit deutlich höhere Wärmeleitfähigkeiten aufweist.

Durch die Verwendung organischer Bindemittelsysteme kann zwar eine verbesserte Wärmedämmung erreicht werden, jedoch wirkt sich dieses negativ auf das Brandverhalten der Ziegel aus.

Es hat im Stand der Technik daher nicht an Versuchen gefehlt, die bestehenden Systeme zur Wärmedämmung von Hohlziegeln zu verbessern.

So beschreibt beispielsweise die EP 3 020 691 A2 eine Baustoffmischung zur Herstellung eines Polymerwerkstoffs, insbesondere eines Polymerbetonsystems, wobei die Baustoffmischung eine Härterkomponente und eine Füllstoffkomponente aufweist, wobei die Härterkomponente Polycarbonsäure, insbesondere Maleinsäure, aufweist, wobei die Härterkomponente zusätzlich zur Polycarbonsäure auch Hydroxycarbonsäure, insbesondere Zitronensäure, aufweist.

Die EP 1 854 620 A1 betrifft ein Verfahren zum Verfüllen von Hohlräumen mit Schaumstoffpartikeln, welches die Stufen (a) Benetzen der Schaumstoffpartikel mit Wasser, einer wässrigen Lösung oder wässrigen Dispersion, (b) Befüllen des Hohlraumes mit benetzen Schaumstoffpartikeln, (c) Koagulieren einer wässrigen Polymerdispersion mit einem Koagulationsmittel in dem mit Schaumstoffpartikeln gefüllten Hohlraum, umfasst sowie Bauelemente erhältlich nach dem Verfahren durch Befüllen von Hohlräumen von Hohlblocksteinen mit Schaumstoffpartikeln.

Weiterhin betrifft die EP 1 745 901 A2 ein Verfahren zur Herstellung eines Formsteins, beispielsweise eines Mauersteins, insbesondere eines Ziegels, mit einem vorzugsweise im Wesentlichen quaderförmigen Körper, der zwei im Wesentlichen parallel und im Abstand zueinander ausgerichtete große Oberflächen und im Wesentlichen hierzu rechtwinklig verlaufende Seitenflächen sowie im Wesentlichen parallel zu den Seitenflächen und im Wesentlichen rechtwinklig zu den großen Oberflächen verlaufende Kanäle aufweist, in die zumindest teilweise eine Füllung aus einem Dämmstoffmaterial eingebracht wird, wobei zumindest ein Teil der Kanäle mit schütt- und/oder blasfähigen Dämmstoffpartikeln aus Mineralfasern mit oder ohne Bindemittel ausgefüllt wird. Ferner wird ein aus Formstein gebildetes Mauerwerk und eine Vorrichtung zum Einbringen von schütt- und/oder blasfähigen Dämmstoffpartikeln in Kanäle eines Formsteins offenbart.

Die WO 2006/069411 A1 betrifft eine schäumbare, härtbare und formbare Masse, die aus mit einer Überzugsmasse überzogenen Partikeln besteht und sich zur Herstellung von Formkörpern eignet. In dem daraus hergestellten Formkörper stehen die Partikel miteinander mechanisch in Kontakt und das Leervolumen zwischen den Partikeln wird in einem einstellbaren Ausmaß durch Schaum gefüllt. Dadurch werden die mechanischen und isolierenden Eigenschaften des Partikelgerüstes mit den mechanischen und isolierenden Eigenschaften der gehärteten Schaummasse kombiniert. Die gehärtete und geschäumte Masse eignet sich insbesondere für Dämmstoff-, Brandschutz- und Hochtemperaturanwendungen.

Die DE 10 2008 028 508 A1 betrifft eine Installationswand, bei welcher zur Erzielung guter bauphysikalischer Eigenschaften ein durch eine Wandkonstruktion gebildeter Hohlraum mit einer mineralischen Verfüllmasse befüllt wird. Die Verfüllmasse weist ein mit einem Bindemittel gebundenes Leichtfüllstoffgranulat auf. Nach dem Abbinden des Bindemittels verfestigt sich die Verfüllmasse.

Die WO 2016/116496 A1 offenbart eine Baustoffmischung, welche im Wesentlichen aus zementklinkerfreien Komponenten besteht und durch Mischen einer Grundkomponente mit einer Aktivatorkomponente hergestellt wird. Die Grundkomponente besteht aus Wasser, gelösten Bestandteilen und Partikeln unter 5 mm Durchmesser, hat eine dünnflüssige Konsistenz, enthält wenigstens ein Tonmineral-Schichtsilikat, wenigstens ein latent-hydraulisches Bindemittel und wenigstens eine Gesteinskörnung und bindet entweder nicht selbständig ab oder weist eine Abbindezeit auf, die auf mindestens 48 h verzögert ist. Die Aktivatorkomponente ist ebenfalls flüssig und enthält wenigstens einen Aktivator zum Aktivieren des latent-hydraulischen Bindemittels.

Schließlich betrifft die DE 10 2015 117 035 A1 poröse Kompositpartikel, umfassend mindestens ein poröses Trägermaterial, wobei die Poren des porösen Trägermaterials mindestens ein Aerogel aufweisen sowie die porösen Kompositpartikel enthaltenden Dämmstoffe.

Außerdem betrifft die EP 2 000 607 A2 einen Formstein aus Keramik oder Beton mit mindestens einem Hohlraum, wobei der Hohlraum mit einem wärmedämmenden Material, vorzugsweise einem Aerogel, in loser Schüttung befüllt ist. Durch die Verwendung von Aerogelen können sowohl die wärmedämmenden als auch die schallisolierenden Eigenschaften des Formsteins deutlich erhöht werden, jedoch ist Aerogel, insbesondere in loser Schüttung, äußerst empfindlich gegenüber mechanischer Beanspruchung und darüber hinaus sehr kostenintensiv. Bei der maschinellen Verarbeitung des Aerogels wird das gegenüber mechanischer Belastung äußerst empfindlichen Aerogels zumindest teilweise zerstört, so dass sich die Kosten für die Produktion der Formsteine weiter erhöhen.

Die EP 2 028 329 B1 beschreibt einen Wärmedämmziegel aus einem gebrannten Ziegelmaterial, welchem vor dem Brennvorgang ein porenbildendes Material zugesetzt wird, so dass der Wärmedämmziegel während des Brennvorganges eine poröse Struktur erhält. Zusätzlich werden Hohlräume zumindest teilweise mit einem Wärmedämmmaterial verfüllt. Insbesondere ist es vorgesehen, das Wärmedämmmaterial als Schüttgut in einer sackartigen Hülle in den jeweiligen Hohlräumen zu platzieren.

Weiterhin betrifft die DE 10 2013 101 840 A1 einen Lochziegel, welcher mit einer aufgeschäumten Bindemittelmischung gefüllt wird, die einen Leichtzuschlag, wie beispielsweise expandierten Perlit oder Aerogel, aufweist.

Die zuvor genannten Wege zur Verbesserung der Wärmedämmung von Hohlziegeln sind allesamt geeignet, deutlich verbesserte Wärmedämmeigenschaften von Hohlziegeln erzielen, sie können die prinzipiellen Nachteile der verwendeten Bindemittelsysteme und Dämmstoffmaterialien jedoch nicht überkommen.

Neben den zuvor geschilderten Problemen bei der Verbesserung der Wärmedämmeigenschaften von Hohlziegeln ergeben sich auch verfahrenstechnische Schwierigkeiten bei der Herstellung gefüllter Loch- bzw. Hohlziegel, welche die Kosten für Ziegel mit einer verbesserten Wärmedämmung unverhältnismäßig in die Höhe treiben. So werden in Ziegelwerken die frisch gebrannten Ziegel nach Durchlaufen einer Abkühlungsphase, während welcher die Ziegel in der Regel auf einem Transportband bewegt werden, bei Temperaturen zwischen 100 und 300 °C gestapelt. Die gestapelten Ziegel kühlen dann vollständig aus und werden für den Versand vorbereitet. Um diesen Verfahrensablauf im Ziegelwerk auch bei einer Befüllung der Ziegel mit einem Dämmstoff möglichst beibehalten zu können, beträgt das Zeitfenster, in welchem der Dämmstoff in die Hohlräume der Ziegel eingebracht werden kann und dort haften muss, lediglich 10 Minuten. Das heißt ein in die Hohlräume der Ziegel eingebrachter Dämmstoff, insbesondere eine Dämmmasse muss vorzugsweise innerhalb dieser Zeitspanne soweit in den Hohlräumen des Ziegels haften, dass er nicht mehr herausfällt oder -tropft und zumindest an seiner Oberfläche soweit ausgehärtet und vernetzt sein, dass die gestapelten Ziegel nicht verblocken, sondern separiert bleiben.

Mit üblichen Bindemittelsystemen sind derartig hohe Anfangsfestigkeiten sowie eine schnelle zumindest oberflächliche Aushärtung jedoch nicht zu erreichen, weshalb die Befüllung der Ziegel entweder zeitlich deutlich nach der Herstellung der Ziegel in einem separaten Verfahren erfolgt oder beispielsweise die Transportbänder zur Abkühlung und Befüllung der Ziegel mit einer Dämmmasse sowie zur Aushärtung der Dämmmasse deutlich verlängert werden müssen. Dies ist jedoch mit deutlich verlängerten Prozesslaufzeiten, einem gesteigerten Platzbedarf und somit insgesamt deutlich höheren Kosten verbunden.

Es fehlt zum Stand der Technik weiterhin an einem Verfahren, mit welchem die Hohlräume von Formkörpern, insbesondere von Lochziegeln, effizient gefüllt werden, so dass einerseits verbesserte Wärmedämmeigenschaften erreicht werden und andererseits die Herstellungskosten gegenüber den bislang bekannten Verfahren deutlich gesenkt sind.

Darüber hinaus fehlt es weiterhin auch an einer Füllmasse, welche die Hohlräume von Hohlziegeln möglichst gleichmäßig und vollständig ausfüllt, mechanisch belastbar ist und zu ökonomisch vertretbaren Kosten zugänglich ist.

Es ist somit eine Aufgabe der vorliegenden Erfindung, ein Verfahren inklusive eines Materials bereitzustellen, welches die mit dem Stand der Technik verbundenen Nachteile und Probleme vermeidet, zumindest jedoch abschwächt.

Der vorliegenden Erfindung liegt somit die Aufgabe zugrunde, ein Verfahren bereitzustellen, mit welchem die Hohlräume von Lochziegeln und anderen Formkörpern in effizienter Weise mit einem wärmedämmenden Material, insbesondere einer Füllmasse, gefüllt werden können, wobei ein unbeabsichtigtes Entfernen, insbesondere ein Herausfallen, der Füllmasse aus den Hohlräumen vermieden wird.

Weiterhin ist eine Aufgabe der vorliegenden Erfindung darin zu sehen, ein Verfahren bereitzustellen, welches die Befüllung von Hohlziegeln während des üblichen Herstellungsprozesses der Ziegel ermöglicht.

Darüber hinaus ist eine weitere Aufgabe der vorliegenden Erfindung darin zu sehen, ein Verfahren und eine Füllmasse bereitzustellen, welche es ermöglichen, die Formkörper kurz nach Ihrer Befüllung zu stapeln, ohne dass es zu einer Verblockung, d. h. einem Verkleben, der Formkörper kommt.

Insbesondere ist eine weitere Aufgabe der vorliegenden Erfindung, im Rahmen des Verfahrens eine formbare

Füllmasse bereitzustellen, welche sich den Hohlräumen von Lochziegeln und anderen Formkörpern anpasst, dort selbstständig haftet und gegenüber mechanischer Belastung unempfindlich ist.

Schließlich ist eine Aufgabe der vorliegenden Erfindung darin zu sehen, im Rahmen des Verfahrens eine Füllmasse bereitzustellen, welche nicht nur mechanisch belastbar ist und verbesserte Wärmedämmeigenschaften aufweist, sondern darüber hinaus auch kostengünstig herzustellen ist.

Die zuvor geschilderte Aufgabenstellung wird erfindungsgemäß durch ein Verfahren nach Anspruch 1 gelöst; weitere vorteilhafte Weiterbildungen und Ausgestaltungen des erfindungsgemäßen Verfahrens sind Gegenstand der diesbezüglichen Unteransprüche.

Es versteht sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegeben Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können. Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung ist somit ein Verfahren zum Befüllen von Hohlräumen, insbesondere zum Befüllen der Hohlräume von Formkörpern, mit einer Füllmasse, insbesondere einer Dämmmasse, aufweisend mindestens ein Bindemittel, wobei das Bindemittel ausgewählt ist aus organisch basierten Bindemitteln und Mischungen aus anorganisch basierten Bindemitteln und organisch basierten Bindemitteln, dass die Füllmasse mindestens einen Photoinitiator zur Initiierung und/oder Beschleunigung einer Vernetzungsreaktion des organisch basierten Bindemittels aufweist und dass der Photoinitiator unmittelbar vor Einbringen der Füllmasse in die Hohlräume, insbesondere in die Hohlräume eines Formkörpers, durch Einwirkung elektromagnetischer Strahlung aktiviert wird.

Denn, wie nunmehr überraschend gefunden wurde, lässt sich durch eine Füllmasse, welche einen Photoinitiator zur Initiierung bzw. Beschleunigung der Vernetzungsreaktion des Bindemittels aufweist, ein Verfahren zur Befüllung der Hohlräume von Formkörpern durchführen, welches sich problemlos in die üblichen Prozesse bei der Herstellung von Hohlziegeln integrieren lässt. Insbesondere ist es durch die erfindungsgemäße Verfahrensführung möglich, gefüllte Formkörper bereitzustellen, deren Füllmasse eine hohe Anfangsfestigkeit aufweist und bereits nach 10 Minuten derart vernetzt ist, dass die Füllmasse nicht mehr unbeabsichtigt aus den Hohlräumen des Formkörpers entfernt wird bzw. herausfällt oder -tropft und darüber hinaus kein Verblocken der einzelnen Ziegel beim Stapeln bzw. während der Lagerung zu beobachten ist.

Im Rahmen der vorliegenden Erfindung ist es vorgesehen, dass der Photoinitiator unmittelbar vor Einbringen der Füllmasse in die Hohlräume, insbesondere in die Hohlräume des Formkörpers, aktiviert wird. Auf diese Weise ist es möglich, die Haftung der Füllmasse an den Hohlraumwänden, die Anfangsfestigkeit sowie die Vernetzungsgeschwindigkeit gezielt zu steuern.

Unter einem Photoinitiator ist damit im Rahmen der vorliegenden Erfindung eine chemische Verbindung zu verstehen, welche durch Anregung durch elektromagnetische Strahlung in einen reaktiven bzw. angeregten Zustand überführt wird und in diesem reaktiven bzw. angeregten Zustand die Vernetzungsreaktion des Bindemittels startet, d. h. initiiert, oder beschleunigt. Oftmals werden Photoinitiatoren durch ihre Aktivierung in reaktive Radikale gespalten, welche anschließend schnell reagieren und insbesondere im Bereich der Polymerchemie Kettenreaktionen initiieren.

Im Rahmen der vorliegenden Erfindung ist es also vorgesehen, dass der Initiator ein Photoinitiator ist.

In diesem Zusammenhang kann es vorgesehen sein, dass der Photoinitiator als Salz vorliegt, insbesondere ein Salz ist. Im Rahmen der vorliegenden Erfindung hat es sich, für den Fall, dass der Photoinitiator als Salz vorliegt, bewährt, wenn der Photoinitiator ausgewählt ist aus der Gruppe von Aryldiazoniumsalzen, Diaryliodoniumsalzen, Triarylsulfoniumsalzen, Ferroceniumsalzen, Phenacyltriphenylphosphoniumsalzen, *N*-Alkoxypyridiniumsalzen, Pyryliumsalzen und Thiapyryliumsalzen und deren Mischungen.

Wie zuvor bereits ausgeführt, enthält die Füllmasse einen Photoinitiator. Besonders gute Ergebnisse werden in diesem Zusammenhang erhalten, wenn die Füllmasse den Photoinitiator in Mengen von 0,01 bis 5 Gew.-%, insbesondere 0,1 bis 4 Gew.-%, vorzugsweise 0,5 bis 3 Gew.-%, bevorzugt 1 bis 2 Gew.-%, bezogen auf die Füllmasse, enthält.

Die vorgenannten Mengen an Photoinitiator sind üblicherweise ausreichend, um ein weitgehendes Aushärten der Füllmasse in den Hohlräumen des Formkörpers, insbesondere der Lochziegel, innerhalb eines Zeitfensters von 10 bis 15 Minuten zu gewährleisten, jedoch ist nach Aktivierung des Photoinitiators ausreichend Zeit, die Füllmasse in die Hohlräume des Formkörpers einzufüllen und dort gegebenenfalls noch zu verdichten.

Im Rahmen der vorliegenden Erfindung ist es weiterhin vorgesehen, dass der Initiator durch Einwirkung elektromagnetischer Strahlung aktiviert wird.

Hierbei erfolgt die Einwirkung der elektromagnetischen Strahlung insbesondere im IR-Bereich oder im US/VIS-Bereich des elektromagnetischen Spektrums. Insbesondere wird die elektromagnetische Strahlung üblicherweise durch IR-Strahler oder UV/VIS-Strahler erzeugt.

Was darüber hinaus das Bindemittel anbelangt, welches im Rahmen der vorliegenden Erfindung für die Füllmasse verwendet wird, so ist dieses ausgewählt aus organisch basierten Bindemitteln und Mischungen aus organisch basierten und anorganisch basierten Bindemitteln. Der Einsatz von nur anorganisch basierten Bindemitteln ist ausdrücklich nicht erfindungsgemäss. Anorganisch basierte Bindemittel haben den Vorteil, dass die Füllmassen und insbesondere die verfüllten Formkörper aus nicht brennbaren Materialien bestehen und folglich zur Einhaltung von Brandschutzvorschriften keine besondere Behandlung der Formkörper, insbesondere mit chemischen Brandschutzmitteln, notwendig ist.

Ein organisches Bindemittelsystem wird verwendet bzw. dem anorganisch basierten Bindemittel werden geringe Mengen des organischen Bindemittels beigefügt, da insbesondere die Vernetzungsreaktionen organischer Bindemittelsysteme durch Photoinitiatoren besonders beschleunigt werden, so dass schon mit sehr geringen Mengen an Initiator eine rasche Aushärtung des Bindemittels erzielt werden kann.

Wenn im Rahmen der vorliegenden Erfindung ein anorganisch basiertes Bindemittel eingesetzt wird, so ist dieses üblicherweise ausgewählt aus mineralischen und/oder siliciumbasierten Bindemitteln, vorzugsweise siliciumbasierten Bindemitteln. Bei mineralischen Bindemittelsystemen handelt es sich insbesondere um zementbasierte Systeme, welche beispielsweise in Form von Dämmputzen eingesetzt werden können. Zur Verfüllung von Hohlräumen, insbesondere zu Zwecken der Wärmedämmung, werden im Rahmen der vorliegenden Erfindung jedoch vorzugsweise siliciumbasierte, insbesondere silikatbasierte, Systeme verwendet, da diese gegenüber mineralisch basierten Systemen eine deutlich verringerte Wärmeleitfähigkeit sowie ein geringeres Eigengewicht aufweisen. Der Vorteil mineralisch basierter Systeme, insbesondere zementbasierter Systeme, ist hingegen in der höheren Festigkeit zu sehen.

Im Rahmen der vorliegenden Erfindung werden besonders gute Ergebnisse erhalten, wenn das anorganisch basierte Bindemittel ausgewählt ist aus Silikaten, Kieselsäuren, Silanen, Silanolen, Silanhydrolysaten, Silikonaten, Polysiloxanen und deren Mischungen.

In diesem Zusammenhang hat es sich bewährt, wenn das anorganisch basierte Bindemittel ausgewählt ist aus Silikaten, Kieselsäuren, Silanen, Silanhydrolysaten und deren Mischungen, insbesondere Silikaten und Kieselsäuren sowie deren Mischungen.

Im Rahmen der vorliegenden Erfindung wird es besonders bevorzugt, wenn Mischungen von Silikaten und Kieselsäuren als anorganisch basiertes Bindemittel eingesetzt werden.

Wenn im Rahmen der vorliegenden Erfindung ein Polysiloxan als anorganisch basiertes Bindemittel verwendet wird, so hat es sich bewährt, wenn ein Polysiloxan mit reaktiven funktionellen Gruppen, insbesondere ausgewählt aus Hydroxyfunktionen, Aminen und/oder Carbonsäuren, eingesetzt wird.

Gleichfalls hat es sich bewährt, wenn ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird. Die Molmassen bzw. die Molmassenverteilung kann durch verschiedene, standardisierte Verfahren und Methoden bestimmt werden, wie beispielsweise durch Lichtstreuung, Rheologie, Massenspektrometrie, Permeations-Chromatographie etc. Die zur Bestimmung der Molmassenverteilung verwendeten Verfahren sind dem Fachmann jedoch geläufig und bedürfen keiner näheren Erläuterung. So können die Molmassen der eingesetzten Polymere insbesondere anhand einer GPC-Methode bestimmt werden, insbesondere auf Basis der DIN 55672 mit Polymethylmethacrylat bzw. Polystyrol als Standard.

Vorzugsweise handelt es sich um Polysiloxane, welche als organische Reste Methyl- und/oder Phenylgruppen aufweisen.

Wenn im Rahmen der vorliegenden Erfindung ein Silan als anorganisch basiertes Bindemittel eingesetzt wird, so hat es sich bewährt, wenn ein Silan der allgemeinen Formel I

R¹ₙSiR²₄₋ₙ (I)

mit
- n: = 1 bis 3, insbesondere 1 oder 2, vorzugsweise 1;
- R¹: = C₁- bis C₁₀-Alkyl und/oder C₆- bis C₂₀-Aryl, insbesondere C₁- bis C₈-Alkyl und/oder C₆- bis C₁₅-Aryl, vorzugsweise C₁- bis C₅-Alkyl und/oder C₆- bis C₁₂-Aryl, bevorzugt C₁- bis C₃-Alkyl und/oder C₆- bis C₁₀-Aryl, besonders bevorzugt C₁-Alkyl und/oder C₆- bis C₈-Aryl,
- R²: = Halogenid, insbesondere Chlorid, Bromid und/oder lodid, OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;

verwendet wird. Vorzugsweise ist der Rest R² ein Alkoxyrest, insbesondere ein Ethoxyrest.

Falls im Rahmen der vorliegenden Erfindung ein Silikonat eingesetzt wird, so werden besonders gute Ergebnisse erhalten, wenn ein Silikonat der allgemeinen Formel II

HO-[Si(R)(OM)-O-]ₙH (II)

mit
- n: = 1 bis 6, insbesondere 1 bis 3, vorzugsweise 1;
- R: = C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl; und
- M: = einwertiges Metall, insbesondere Alkalimetall, vorzugsweise Natrium oder Kalium;
verwendet wird.

Wenn im Rahmen der vorliegenden Erfindung ein Silikat als anorganisch basiertes Bindemittel eingesetzt wird, so hat es sich bewährt, wenn das Silikat ausgewählt ist aus Alkalisilikaten, insbesondere Lithiumsilikaten, Natriumsilikaten und Kaliumsilikaten sowie deren Mischungen, insbesondere Lithiumsilikaten und Kaliumsilikaten und deren Mischungen.

Insbesondere werden wässrige Lösungen der Silikate, vorzugsweise Wassergläser, insbesondere Lithiumwasserglas, Natriumwasserglas, Kaliumwasserglas oder deren Mischungen verwendet, wobei die Verwendung von Lithiumwasserglas und Kaliumwasserglas sowie ihrer Mischungen bevorzugt wird.

Im Rahmen der vorliegenden Erfindung wird es für den Fall, dass Kieselsäure als anorganisch basiertes Bindemittel eingesetzt wird, bevorzugt, wenn die Kieselsäure des anorganisch basierten Bindemittels kolloidale Kieselsäure ist. Kolloidale Kieselsäuren werden auch als Kieselsole bezeichnet und bilden insbesondere in Verbindung mit Wassergläsern durch Kondensation besonders stabile Bindemittelsysteme.

Im Rahmen der vorliegenden Erfindung wird es bevorzugt, wenn das anorganisch basierte Bindemittel mindestens ein Silikat und Kieselsäure aufweist. Wenn das anorganisch basierte Bindemittel eine Mischung aus Silikat und Kieselsäure aufweist, so hat es sich bewährt, wenn das anorganisch basierte Bindemittel Silikat und Kieselsäure in einem gewichtsbezogenen Verhältnis von Silikat zu Kieselsäure von 100 : 1 bis 1 : 50, vorzugsweise 50 : 1 bis 1 : 20, bevorzugt 20 : 1 bis 1 : 5, besonders bevorzugt 10 : 1 bis 1 : 2, aufweist.

Im Rahmen der vorliegenden Erfindung so hat es sich bewährt, wenn das organisch basierte Bindemittel ausgewählt ist aus Acrylaten, Methacrylaten, Polyurethanen, Harnstoff-Formaldehydharz-Harzen, Melamin-Harzen, Epoxidharzen, Polyethern, Polyestern und deren Mischungen.

Was nun die Menge an Bindemittel in der Füllmasse anbelangt, so ist es im Rahmen der vorliegenden Erfindung üblicherweise vorgesehen, dass die Füllmasse das Bindemittel in Mengen von von 1 bis 40 Gew.-%, insbesondere 5 bis 30 Gew.-%, vorzugsweise 8 bis 20 Gew.-%, bevorzugt 10 bis 15 Gew.-%, bezogen auf die Füllmasse, enthält. Mit Anteilen an Bindemitteln in den vorgenannten Bereichen ist es möglich, Füllmassen bereitzustellen, welche hervorragend an den Wandungen von Hohlräumen haften, wobei die Füllmassen vorzugsweise in Form von Granulaten vorliegen und die einzelnen Granulatpartikel üblicherweise nicht vollständig von dem Bindemittel benetzt sind. Trotzdem ist die Füllmasse nach der Erfindung bereits kurze Zeit nach der Aktivierung des Initiators strukturstabil und quillt nicht aus den Hohlräumen der Formkörper hervor, so dass ein unbeabsichtigtes Entfernen der Füllmasse aus den Hohlräumen sowie ein Verblocken der einzelnen Formkörper vermieden werden kann.

Gemäß eine bevorzugten Ausführungsform der vorliegenden Erfindung ist es vorgesehen, dass die Füllmasse mindestens einen partikelförmigen Füllstoff, vorzugsweise poröse Partikel, enthält. Im Rahmen der vorliegenden Erfindung weist die Füllmasse somit vorzugsweise mindestens einen partikelförmigen Füllstoff, bevorzugt eine Mischung von partikelförmigen Füllstoffen, auf.

Besonders bevorzugt wird es in diesem Zusammenhang, wenn die partikelförmigen Füllstoffe poröse Partikel sind, da gerade poröse Partikel oftmals in der Lage sind, die Wärmedämmeigenschaften der Füllmasse und der mit der Füllmasse gefüllten Formkörper deutlich zu verbessern. Als Füllstoffe eignen sich insbesondere Vermiculit, insbesondere expandierter Vermiculit, Perlit, insbesondere expandierter Perlit, Aerogel und deren Mischungen. Die vorgenannten Materialien weisen allesamt hervorragende Wärmedämmeigenschaften auf. Gemäß einer besonders bevorzugten Ausführungsform der vorliegenden Erfindung ist der partikelförmige Füllstoff ausgewählt aus neuartigen modifizierten porösen Partikeln, welche nachfolgend noch eingehender beschrieben werden.

Was nun die Menge anbelangt, in welcher die Füllmasse den partikelförmigen Füllstoff enthält, so hat es sich bewährt, wenn die Füllmasse den partikelförmigen Füllstoff in Mengen von 40 bis 99 Gew.-%, insbesondere 50 bis 90 Gew-%, vorzugsweise 55 bis 80 Gew.-%, bevorzugt 60 bis 70 Gew.-%, bezogen auf die Füllmasse, enthält. Im Rahmen der vorliegenden Erfindung wird es somit bevorzugt, wenn die Füllmasse einen hohen Anteil an Füllstoffen und nur einen geringen Anteil an Bindemitteln aufweist, so dass die Wärmedämmeigenschaften der Füllmasse maßgeblich von den verwendeten Füllstoffen bestimmt werden. Insbesondere ist es im Rahmen der vorliegenden Erfindung üblicherweise absolut ausreichend, wenn nur eine teilweise Benetzung der Partikel mit dem Bindemittel erfolgt. Auf diese Weise kann der Anteil an Bindemitteln, welches im Vergleich zu den Füllstoffen, insbesondere zu speziellen wärmedämmenden Füllstoffen, eine deutlich höhere Wärmeleitfähigkeit aufweist, spürbar gesenkt werden. Es muss im Rahmen der vorliegenden Erfindung jedoch gewährleistet sein, dass die Füllstoffe derart benetzt sind, dass die Füllmasse nicht aus den Hohlräumen der Formkörper herausfällt bzw. -quillt, sondern vielmehr fest an den Wandungen der Hohlräume der Formkörper haftet und nach Aushärten die Füllstoffpartikel fest und dauerhaft miteinander verbindet.

Im Rahmen der vorliegenden Erfindung hat es sich insbesondere bewährt, wenn die Füllmasse in Form eines Granulats vorliegt. Durch die Verwendung einer Füllmasse in Form eines Granulats lassen sich besonders dichte Packungen der Füllmasse mit einem hohen Anteil an Füllstoffen in den Hohlräumen der Formkörper erzeugen.

Weiterhin ist im Rahmen der vorliegenden Erfindung üblicherweise vorgesehen, dass die Füllmasse mindestens ein Löse- oder Dispersionsmittel aufweist.

In diesem Zusammenhang hat es sich bewährt, wenn das Löse- oder Dispersionsmittel ein polares Löse- oder Dispersionsmittel, insbesondere ein polares protisches Löse- oder Dispersionsmittel, ist. Polare Löse- oder Dispersionsmittel weisen insbesondere mit mineralischen oder silikatisch basierten Bindemittelsystemen eine besonders hohe Kompatibilität auf.

Gemäß einer bevorzugten Ausführungsform der vorliegenden Erfindung ist es vorgesehen, dass das Löse- oder Dispersionsmittel ausgewählt ist aus der Gruppe von Alkoholen, insbesondere C₁- bis C₈-Alkoholen, Aminen und Wasser, insbesondere Methanol, Ethanol, Propanol und Wasser, vorzugsweise Ethanol und Wasser. Im Rahmen der vorliegenden Erfindung wird es besonders bevorzugt, wenn das Löse- oder Dispersionsmittel Wasser ist. Die Verwendung von Wasser als Löse- oder Dispersionsmittel hat den Vorteil, dass Wasser unter Umwelt- und Arbeitsschutzgesichtspunkten unbedenklich ist und keine weiterführenden Maßnahmen zum Personen- oder Umweltschutz getroffen werden müssen.

Was die Menge anbelangt, in welcher die Füllmasse das Löse- oder Dispersionsmittel enthält, so hat es sich bewährt, wenn die Füllmasse das Löse- oder Dispersionsmittel in Mengen von 1 bis 30 Gew.-%, insbesondere 2 bis 20 Gew.-%, vorzugsweise 5 bis 15 Gew.-%, bevorzugt 7 bis 12 Gew.-%, bezogen auf die Füllmasse, enthält.

Darüber hinaus kann es vorgesehen sein, dass die Füllmasse weiterhin Additive aufweist. Falls die Füllmasse im Rahmen der vorliegenden Erfindung Additive aufweist, so weist die Füllmasse die Additive üblicherweise in Mengen von 0,1 bis 20 Gew.-%, insbesondere 0,5 bis 10 Gew.-%, vorzugsweise 1 bis 8 Gew.-%, bevorzugt 1 bis 5 Gew.-%, bezogen auf die Füllmasse, auf.

In diesem Zusammenhang hat es sich bewährt, wenn die Additive ausgewählt sind aus der Gruppe von Härtern, Hydrophobierungsmitteln, Rheologiestellmitteln und deren Mischungen.

Gemäß einer bevorzugten Ausführungsform der vorliegenden Erfindung kann es vorgesehen sein, dass die Füllmasse mindestens einen Härter für das Bindemittel als Additiv aufweist. Bei einem Härter handelt es sich im Rahmen der vorliegenden Erfindung um eine Substanz oder um ein Substanzgemisch, welche das Abbinden des Bindemittelsystems, d. h. das Aushärten der Füllmasse, beschleunigt.

Als Härter kommt eine Vielzahl möglicher Verbindungen in Betracht. Im Rahmen der vorliegenden Erfindung werden jedoch besonders gute Ergebnisse erhalten, wenn der Härter ausgewählt ist aus Phosphatestern, Carbonsäureestern, Aluminaten, und deren Mischungen. Besonders bevorzugt wird es in diesem Zusammenhang, wenn der Härter ausgewählt ist aus Estern, vorzugsweise Alkylestern, der Kohlensäure, der Ameisensäure, der Essigsäure, der Propansäure, der Oxalsäure, der Adipinsäure und der Bernsteinsäure, Natriumaluminaten sowie deren Mischungen.

Darüber hinaus kann es im Rahmen der vorliegenden Erfindung gleichfalls vorgesehen sein, dass die Füllmasse mindestens ein Rheologiestellmittel enthält. Ein Rheologiestellmittel wirkt sich insbesondere vorteilhaft auf die Einstellung der Viskosität und auch der Haftung sowie der Verarbeitungsqualität der Füllmasse aus.

Gemäß einer bevorzugten Ausführungsform der vorliegenden Erfindung weist die Füllmasse mindestens ein Hydrophobierungsmittel auf. Durch die Verwendung eines Hydrophobierungsmittels kann insbesondere die Wasserabsorption bzw. -resorption durch die üblicherweise mineralisch basierten Füllstoffe verhindert bzw. zumindest vermindert werden.

Wenn die Füllmasse ein Hydrophobierungsmittel enthält, so kann dieses ausgewählt sein aus der Gruppe von Silanen, Silanhydrolysaten, Silanolen und Siloxanen sowie deren Mischungen, insbesondere Silanolen und Siloxanen sowie deren Mischungen.

Üblicherweise weist die Füllmasse im Rahmen der vorliegenden Erfindung eine Wärmeleitfähigkeit bei 25 °C im Bereich von 0,020 bis 0,040 (Wm)/K, insbesondere 0,022 bis 0,035 (Wm)/K, vorzugsweise 0,025 bis 0,030 (Wm)/K, auf.

Darüber hinaus wird es im Rahmen der vorliegenden Erfindung bevorzugt, wenn die Füllmasse ein Trockenrohdichte im Bereich von 100 bis 200 g/l, insbesondere 110 bis 180 g/l, vorzugsweise 120 bis 150 g/l, aufweist. Die im Rahmen der vorliegenden Erfindung eingesetzte Füllmasse besitzt somit eine extrem geringe Trockenrohdichte und erhöht das Gewicht der Formkörper, in welche sie eingebracht wird, somit in der Regel nur in untergeordnetem Maße.

Gemäß einer bevorzugten Ausführungsform der vorliegenden Erfindung ist es vorgesehen, dass die Füllmasse durch Inkontaktbringen eines partikelförmigen Feststoffs, insbesondere einer Trockenmischung, mit einer Lösung oder Dispersion des Bindemittels hergestellt wird. Im Rahmen der vorliegenden Erfindung wird somit ein partikelförmiger Feststoff, d. h. ein Granulat, welches zumindest aus den zuvor beschriebenen partikelförmigen Füllstoffen besteht, jedoch auch Additive, wie zum Beispiel Hydrophobierungsmittel und Härter, enthalten kann, mit einer Lösung oder Dispersion des Bindemittels, welche gleichfalls Additive, wie Hydrophobierungsmittel oder Härter, enthalten kann, in Kontakt gebracht, so dass die Füllmasse, insbesondere in Form eines Granulates, resultiert. Der Photoinitiator kann dabei sowohl dem partikelförmigen Feststoff als auch der Lösung oder Dispersion des Bindemittels oder beidem beigemischt werden, wobei üblicherweise der Initiator der Lösung oder Dispersion des Bindemittels beigemischt ist, um eine möglichst gleichmäßige Verteilung des Initiators in der Füllmasse zu erreichen.

Die vorliegende Erfindung betrifft somit ein Verfahren zum Befüllen von Hohlräumen, insbesondere zum Befüllen der Hohlräume von Formkörpern, mit einer Füllmasse, insbesondere einer Dämmmasse, wie zuvor beschrieben, wobei
(a) in einem ersten Verfahrensschritt ein partikelförmiger Feststoff, insbesondere eine Trockenmischung, mit einer Lösung oder Dispersion eines Bindemittels in Kontakt gebracht wird, so dass eine der Füllmasse erhalten wird, wobei der partikelförmige Feststoff und/oder die Lösung oder Dispersion des Bindemittels mindestens einen Photoinitiator aufweist,
(b) in einem auf den ersten Verfahrensschritt (a) folgenden zweiten Verfahrensschritt der Photoinitiator durch Einwirkung elektromagnetischer Strahlung aktiviert wird, wodurch eine Vernetzungsreaktion des Bindemittels initiiert und/oder beschleunigt wird, und
(c) in einem auf den zweiten Verfahrensschritt (b) folgenden dritten Verfahrensschritt die Füllmasse in einen Hohlraum, insbesondere in den Hohlraum eines Formkörpers, eingebracht wird.

Auf diese spezielle bevorzugte Ausführungsform des erfindungsgemäßen Verfahrens lassen sich alle Merkmale und Ausführungsformen, welche zuvor im Zusammenhang mit dem erfindungsgemäßen Verfahren sowie der Füllmasse nach der Erfindung beschrieben wurde, anwenden.

Besonders gute Ergebnisse werden im Rahmen der vorliegenden Erfindung erhalten, wenn der partikelförmige Feststoff, insbesondere in Verfahrensschritt (a), mit der Lösung oder Dispersion des Bindemittels besprüht wird. Durch ein Besprühen des partikelförmigen Feststoffs mit der Lösung oder Dispersion des Bindemittels, d. h. durch einen Sprühauftrag, lässt sich eine besonders dünnschichtige und geringe Benetzung des partikelförmigen Feststoffs erzielen, so dass der Einsatz an Bindemitteln minimiert werden kann.

Was nun das Inkontaktbringen des partikelförmigen Feststoffs mit der Lösung oder Dispersion des Bindemittels anbelangt, so kann dieses entweder kontinuierlich durchgeführt werden oder auch batchweise. Bei einer kontinuierlichen Durchführung des erfindungsgemäßen Verfahrens werden der partikelförmige Feststoff beispielsweise mit einer Transporteinrichtung transportiert und dann kontinuierlich mit der Lösung oder Dispersion des Bindemittels in Kontakt gebracht, insbesondere besprüht. Gleichfalls ist es auch möglich, dass der partikelförmige Feststoff durch einen Reaktor, beispielsweise in Form eines Sprühturms, fällt und währenddessen mit der Lösung oder Dispersion des Bindemittels besprüht wird. Es ist aber auch eine batchweise Herstellung der erfindungsgemäßen Füllmasse, insbesondere in einem Trommelmischer, möglich.

Im Rahmen der vorliegenden Erfindung kann es vorgesehen sein, dass der partikelförmige Feststoff eine Mischung aus den partikelförmigen Füllstoffen, insbesondere porösen Partikeln, und Additiven ist. Vorzugsweise sind die Additive, welche den partikelförmigen Füllstoffen beigemisch sind, gleichfalls partikelförmig.

Darüber hinaus kann es im Rahmen der vorliegenden Erfindung jedoch auch vorgesehen sein, dass die Lösung oder Dispersion des Bindemittels Additive aufweist.

Im Rahmen der vorliegenden Erfindung kann es somit vorgesehen sein, dass sowohl der partikelförmige Feststoff Additive aufweist als auch die Lösung oder Dispersion des Bindemittels. Üblicherweise weisen sowohl der partikelförmige Feststoff als auch die Lösung oder Dispersion des Bindemittels Additive auf, wobei die Auswahl, welche Additive eingesetzt bzw. dem Feststoff zugegeben werden oder der Lösung oder Dispersion des Bindemittels zugegeben werden, von den Eigenschaften der Additive sowie der herzustellenden Füllmasse abhängig ist und vom Fachmann entsprechend angepasst wird.

Im Rahmen der vorliegenden Erfindung werden besonders gute Ergebnisse erhalten, wenn ein gewichtsbezogenes Verhältnis von partikelförmigem Feststoff zu Feststoffanteil der Lösung oder Dispersion des Bindemittels, insbesondere in Verfahrensschritt (a), im Bereich von 1 : 5 bis 15 : 1, insbesondere 1 : 1 bis 10 : 1, vorzugsweise 3:1 bis 8:1, bevorzugt 5:1 bis 6:1, eingestellt wird. Im Rahmen der vorliegenden Erfindung wird vorzugsweise mit einem großen Überschuss an partikelförmigem Feststoff gearbeitet, damit die Füllmasse vorzugsweise in Form eines benetzten Granulates vorliegt.

Unter dem Feststoffanteil der Lösung oder Dispersion des Bindemittels wird im Rahmen der vorliegenden Erfindung der Teil des Bindemittels verstanden, welcher nach Entfernung der flüchtigen Bestandteile zurückbleibt.

Darüber hinaus kann es im Rahmen der vorliegenden Erfindung vorgesehen sein, dass nach der Einbringung der Füllmasse in den Hohlraum, insbesondere in Verfahrensschritt (c), die Füllmasse in dem Hohlraum verdichtet wird, insbesondere durch Pressen und/oder durch Vibration, vorzugsweise durch Vibration. Eine Verdichtung der Füllmasse in dem Hohlraum eines Formkörpers ist insbesondere vorteilhaft, um besonders gute und reproduzierbare Wärmedämmeigenschaften der resultierenden Formkörper zu erzielen. Besonders bevorzugt wird es in diesem Zusammenhang, wenn die Füllmasse mittels Vibration, insbesondere durch Rütteln, verdichtet wird. Auf diese Weise bildet sich eine dichte Kugelpackung der einzelnen Füllstoffpartikel aus, ohne dass die Füllstoffe durch eine zu hohe mechanische Belastung beschädigt oder gar zerstört werden, was sich negativ auf die Wärmedämmeigenschaften der Füllmasse auswirken würde.

Im Rahmen der vorliegenden Erfindung kann es darüber hinaus weiterhin vorgesehen sein, dass die Einbringung der Füllmasse in den Hohlraum und gegebenenfalls die Verdichtung der Füllmasse bei erhöhter Temperatur durchgeführt wird. Wenn die Einbringung der Füllmasse in den Hohlraum und gegebenenfalls die Verdichtung der Füllmasse bei erhöhter Temperatur durchgeführt wird, so wird die Einbringung der Füllmasse in den Hohlraum und gegebenenfalls die Verdichtung der Füllmasse bei Temperaturen im Bereich von 50 bis 500 °C, insbesondere 70 bis 400 °C, vorzugsweise 85 bis 350 °C, bevorzugt 100 bis 300 °C, durchgeführt. Eine Verarbeitung der Füllmasse bei diesen Temperaturen bewirkt zum einen eine schnellere Entfernung des Löse- oder Dispersionsmittels aus der Füllmasse und beschleunigt darüber hinaus die Vernetzungsreaktion des Bindemittels.

Darüber hinaus ermöglicht die Einbringung der Füllmasse in den Hohlraum, bei erhöhten Temperaturen insbesondere im Rahmen der Ziegelherstellung, eine problemlose Einbettung des erfindungsgemäßen Verfahrens in bestehende Prozesse zur Herstellung von Loch- bzw. Hohlziegeln, da die frisch hergestellten Ziegel in noch heißem Zustand gestapelt und gelagert werden.

Gemäß einer weiteren bevorzugten Ausführungsform der vorliegenden Erfindung ist es vorgesehen, dass nach der Einbringung der Füllmasse in den Hohlraum, insbesondere in Verfahrensschritt (c), und gegebenenfalls der Verdichtung der Füllmasse die Füllmasse in einem nachfolgenden Verfahrensschritt, insbesondere in einem Verfahrensschritt (d), die Füllmasse einer weiteren Aktivierung des Photoinitiators unterzogen wird. Die bei der gegebenenfalls durchgeführten weiteren Aktivierung des Photoinitiators vorliegenden Bedingungen entsprechen denen bei der ersten Aktivierung. Die zweite Aktivierung des Photoinitiators hat insbesondere den Vorteil, dass die Vernetzungsreaktionen an der Oberfläche der Füllmasse nochmals beschleunigt werden, so dass die Oberfläche der Füllmasse bereits weitestgehend ausgehärtet ist und ein Verblocken der Formkörper, bei Lagerung, insbesondere bei Lagerung in Stapeln, ausgeschlossen werden kann.

Wie eingangs bereits erwähnt, werden im Rahmen der vorliegenden Erfindung besonders gute Ergebnisse erhalten, wenn Füllstoffe auf Basis spezieller modifizierter poröser Partikel, verwendet werden. Bei diesen speziellen modifizierten Partikeln handelt es sich entweder um poröse Partikel, insbesondere Kompositpartikel, deren offene Poren ein Aerogel aufweisen, und/oder um poröse Partikel, deren geschlossene Poren ein wärmedämmendes Gas aufweisen.

Nachfolgend werden zunächst die Kompositpartikel sowie ihre Herstellung eingehender beschrieben.

Im Rahmen dieser Ausführungsform der vorliegenden Erfindung ist es vorzugsweise vorgesehen, dass die Kompositpartikel ein poröses Trägermaterial umfassen, wobei die Poren des porösen Trägermaterials mindestens ein Aerogel aufweisen. Insbesondere sind die Poren des porösen Trägermaterials mit einem Aerogel gefüllt. Auf diese Weise wird es möglich, einerseits die Dämmeigenschaften, insbesondere die Wärmedämmeigenschaften, des porösen Trägermaterials durch das Aerogel deutlich zu verbessern, andererseits wird das Aerogel in den Poren des porösen Trägermaterials effektiv vor äußeren Einflüssen, insbesondere vor mechanischen Belastungen, geschützt.

Die Kompositpartikel zeichnen sich durch spezielle physikalische Eigenschaften aus: Ihre mechanischen Eigenschaften entsprechend weitgehend denen des porösen Trägermaterials, wohingegen die Wärmedämmeigenschaften der Kompositpartikel gegenüber dem porösen Trägermaterial deutlich verbessert sind.

Durch die porösen Kompositpartikel ist es möglich, diffusionsoffene Dämmstoffe zu erzeugen, welche einerseits ein nur geringes Schüttgewicht aufweisen und andererseits hervorragende Wärmedämmeigenschaften besitzen. Bei Verwendung von mineralischen Trägermaterialien können die porösen Kompositpartikel darüber hinaus sogar nichtbrennbar ausgebildet sein, so dass eine Behandlung mit umweit- und gesundheitsgefährdenden Brandschutzmitteln vermieden werden kann.

Die porösen Kompositpartikel können einerseits in loser Schüttung verwendet werden, wobei sie bei Wahl geeigneter Partikelgrößen, welche eine dichte Schüttung ergeben, hervorragende Dämmeigenschaften aufweisen.

Was die Größe der Kompositpartikel anbelangt, so kann diese naturgemäß in weiten Bereich variieren. Besonders gute Ergebnisse werden jedoch erhalten, wenn die Kompositpartikel absolute Partikelgrößen im Bereich von 0,1 bis 10 mm, insbesondere 0,5 bis 8 mm, vorzugsweise 0,1 bis 5 mm, bevorzugt 0,1 bis 3 mm, besonders bevorzugt 0,2 bis 2 mm, aufweisen.

Kompositpartikel mit den vorgenannten Partikelgrößen verfügen sowohl in Dämmputzen und Dämm- und Füllmassen als auch in loser Schüttung über besonders gute Wärmedämmeigenschaften. Gleichfalls weisen Kompositpartikel, welche auf porösen mineralischen Trägermaterialien basieren, eine besonders gute mechanische Belastbarkeit im vorgenannten Partikelgrößenbereich auf.

Üblicherweise weisen die Kompositpartikel im Rahmen der vorliegenden Erfindung in loser Schüttung eine Wärmeleitfähigkeit im Bereich von 0,020 bis 0,045 W/(mK), insbesondere 0,022 bis 0,042 W/(mK), vorzugsweise 0,023 bis 0,040 W/(mK), bevorzugt 0,024 bis 0,035 W/(mK), besonders bevorzugt 0,025 bis 0,030 W/(mK), auf. Die porösen Kompositpartikel weisen somit im Vergleich zu rein mineralischen Dämmmaterialien mit bekannt guten Wärmedämmeigenschaften, wie beispielsweise expandiertem Perlit oder expandiertem Vermiculit, deutlich verbesserte Wärmedämmeigenschaften, d. h. eine deutlich geringere Wärmeleitfähigkeit, auf.

Was nun die Schüttdichte der Kompositpartikel anbelangt, so kann diese im Rahmen der vorliegenden Erfindung in weiten Bereichen variieren. Es wird jedoch bevorzugt, wenn die Kompositpartikel eine Schüttdichte im Bereich von 50 bis 150 kg/m³, insbesondere 60 bis 100 kg/m³, vorzugsweise 70 bis 80 kg/m³, aufweisen. Die porösen Kompositpartikel können somit einerseits in loser Schüttung als Dämmmaterialien verwendet werden, andererseits ist es jedoch auch möglich, die porösen Kompositpartikel nach der Erfindung in Dämmstoffsysteme, wie beispielsweise Wärmedämmverbundsysteme oder Dämmputze einzuarbeiten, ohne dass das Gewicht der Dämmstoffsysteme stark ansteigt.

Im Rahmen der vorliegenden Erfindung ist es im Allgemeinen vorgesehen, dass gemäß dieser Ausführungsform der vorliegenden Erfindung das Trägermaterial eine Behandlung zur Vergrößerung des Volumens der offenen Poren unterzogen wird. Gemäß dieser Ausführungsform der vorliegenden Erfindung wird somit die offene Porosität, d. h. das Volumen der Hohlräume innerhalb des Trägermaterials, welche mit der Umgebung verbunden sind, erhöht, um ein größeres Volumen zur Einlagerung bzw. Bildung des Aerogels in den Poren zugänglich zu machen. Denn, wie die Anmelderin herausgefunden hat, weist insbesondere expandierter Perlit oftmals einen sehr hohen Anteil an geschlossenen Poren auf, so dass es nicht möglich ist, ein Aerogel in den Poren des porösen Trägermaterials, insbesondere des Perlits, zu bilden. Reagenzlösungen, welche die Edukte zur Bildung der Aerogele enthalten, gelangen nicht in die geschlossenen Poren im Inneren des porösen Trägermaterials. Durch eine Behandlung zur Vergrößerung des offenen Porenvolumens bzw. der spezifischen Oberfläche ist es möglich, deutlich mehr Aerogel in das Porensystem des porösen Trägermaterials einzulagern bzw. dort zu bilden und so Dämmstoffe mit deutlich verbesserten Wärmedämmeigenschaften bereitzustellen, wobei gleichzeitig die mechanische Belastbarkeit der Kompositpartikel gegenüber dem Trägermaterial nicht verringert ist.

Gemäß dieser Ausführungsform der vorliegenden Erfindung kann es weiterhin vorgesehen sein, dass die Kompositpartikel zumindest an ihrer äußeren Oberfläche modifiziert, insbesondere hydrophobiert, sind. Durch eine Oberflächenmodifizierung, insbesondere eine Hydrophobierung, kann bei Verwendung rein mineralischer Trägermaterialien die Hydrophilie und somit die Aufnahme von Wasser durch das Trägermaterial begrenzt oder sogar vollständig vermieden werden. Insbesondere wird es in diesem Zusammenhang bevorzugt, wenn die Oberflächenmodifizierung, insbesondere Hydrophobierung, im Rahmen einer Oberflächenmodifizierung bzw. Hydrophobierung des Aerogels durchgeführt wird.

Im Zuge der Hydrophobierung wird die Oberfläche des porösen Trägermaterials bzw. des Gels, insbesondere des Hydrogels, derart verändert, dass die Wechselwirkung zwischen der Oberfläche und polaren Stoffen, wie beispielsweise Alkoholen oder Wasser, minimiert wird.

Was nun die Oberflächenmodifizierung anbelangt, so können sämtliche aus dem Stand der Technik bekannte und geeignete Maßnahmen zum Einsatz kommen. Im Rahmen der vorliegenden Erfindung werden jedoch gemäß dieser Ausführungsform besonders gute Ergebnisse erhalten, wenn die Oberflächenmodifizierung mittels Aerogelen, Phosphonaten, Sulfonaten, substituierten Aminen, Silanen, Polysiloxanen, Silikonaten, Carbonsäurederivaten, Ethoxylaten, Polyethern, insbesondere Silanen, Silikonaten und Polysiloxanen, vorzugsweise Silanen und Silikonaten, und/oder deren Mischungen erfolgt. Insbesondere durch eine Oberflächenmodifizierung mittels Silanen bzw. Silikonaten oder Polysiloxanen kann eine besonders effektive Hydrophobierung des porösen Trägermaterials erreicht werden.

Im Rahmen der vorliegenden Erfindung wird es bevorzugt, wenn durch die Oberflächenmodifizierung insbesondere die Oberfläche, vorzugsweise die äußere Oberfläche, der porösen Trägermaterialien durch Polysiloxane gebildet wird. Die Polysiloxane können dabei durch direkte Behandlung der Oberfläche mit Polysiloxanen oder bevorzugt durch Behandlung mit Silanen und/oder Silikonaten, welche durch Kondensationsreaktionen zu Polysiloxanen reagieren, aufgebracht bzw. gebildet werden.

Eine Oberflächenmodifizierung der porösen Trägermaterialien hat darüber hinaus den Vorteil, dass die Staubentwicklung bei Verwendung der Kompositpartikel deutlich reduziert, vorzugsweise vollständig unterdrückt wird. Dies gilt insbesondere bei Verwendung mineralisch basierter Trägermaterialien, welche üblicherweise zu starker Staubentwicklung neigen.

Vorteilhafterweise ist es gemäß dieser Ausführungsform der vorliegenden Erfindung vorgesehen, dass das poröse Trägermaterial in Form von Partikeln vorliegt. Wenn bereits das poröse Trägermaterial in Partikelform vorliegt, kann eine möglichst gleichmäßige Befüllung der Poren des porösen Trägermaterials mit dem Aerogel erfolgen.

Wenn das Trägermaterial in Partikelform vorliegt, so hat es sich bewährt, wenn die Partikel des porösen Trägermaterials absolute Partikelgrößen im Bereich von 10 bis 5.000 µm, insbesondere 20 bis 4.000 µm, vorzugsweise 30 bis 3.000 µm, bevorzugt 40 bis 2.000 µm, besonders bevorzugt 50 bis 1.500 µm, aufweisen. Die Partikelgröße des porösen Trägermaterials ist somit vorzugsweise etwas geringer als die Partikelgröße der Kompositpartikel, d. h. das Aerogel befindet sich sowohl in den Poren des porösen Trägermaterials als auch auf dessen Oberfläche. Vorzugsweise wird ein feinteiliges Trägermaterial verwendet, da so eine möglichst vollständige Durchdringung der Poren des porösen Trägermaterials mit den verwendeten Aerogelen bzw. deren Prekursoren möglich wird. Hierdurch werden die Dämmeigenschaften, insbesondere die Wärmeleitfähigkeiten, der Kompositpartikel entscheidend verbessert.

Gemäß dieser Ausführungsform der vorliegenden Erfindung werden besonders gute Ergebnisse erhalten, wenn das poröse Trägermaterial Poren mit Porengrößen im Bereich von 0,05 µm bis 800 µm, insbesondere 0,1 bis 700 µm, vorzugsweise 0,5 µm bis 500 µm, bevorzugt 1 µm bis 300 µm, besonders bevorzugt 2 bis 200 µm, aufweist. Poren mit Größen in den vorgenannten Bereichen spielen insbesondere bei der Wärmeleitfähigkeit der Materialien eine große Rolle, weshalb es wichtig ist, dass gerade diese Poren mit Aerogel gefüllt sind.

Gemäß dieser Ausführungsform der vorliegenden Erfindung kann das poröse Trägermaterial aus einer Vielzahl geeigneter Materialien ausgewählt sein. Es werden jedoch besonders gute Ergebnisse erhalten, wenn das poröse Trägermaterial ausgewählt ist aus der Gruppe von vulkanischem Gestein, Perlit, insbesondere expandiertem Perlit, Vermiculit, insbesondere expandiertem Vermiculit, Bims, Schaum- und Blähglas, Blähton, Blähschiefer, Styropor, Tuff, Lavakies, Lavasand, Schaumkunststoffen und deren Mischungen.

Dabei hat es sich besonders bewährt, wenn das poröse Trägermaterial ausgewählt ist aus mineralischen bzw. silkatbasierten Materialien, insbesondere vulkanischem Gestein, Perlit, insbesondere expandiertem Perlit, Vermiculit, insbesondere expandiertem Vermiculit, Bims, Schaum- und Blähglas, Blähton, Blähschiefer, Tuff, Lavakies, Lavasand, und deren Mischungen. Ganz besonders bevorzugt wird es in diesem Zusammenhang, wenn das poröse Trägermaterial ausgewählt ist aus Perlit, insbesondere expandiertem Perlit, Vermiculit, insbesondere expandiertem Vermiculit, Bims, Schaum- und Blähglas, Blähton, Blähschiefer, Tuff, und deren Mischungen, wobei die besten Ergebnisse mit Perlit, insbesondere expandiertem Perlit, und Vermiculit, insbesondere expandiertem Vermiculit, vorzugsweise Perlit, besonders bevorzugt expandiertem Perlit, erhalten werden. Die mineralischen bzw. silikatbasierten Trägermaterialien besitzen eine hohe Kompatibilität zu den oftmals gleichfalls silikatbasierten Aerogelen und können mit diesen besonders beständige und dauerhafte Bindungen eingehen. Darüber hinaus verfügen insbesondere die expandierten bzw. geblähten mineralischen bzw. silikatbasierten Trägermaterialien über eine geringe Dichte, so dass sie problemlos in eine Vielzahl von Dämmmaterialien eingearbeitet werden können.

Vorzugsweise weisen die im Rahmen der vorliegenden Erfindung verwendeten Kompositpartikel die Brennbarkeit A1 oder A2 gemäß DIN 4102 auf. Die porösen Kompositpartikel sind somit vorzugsweise nichtbrennbar, was einen weiteren Vorteil gegenüber gebräuchlich organischen Dämmstoffen, seien sie natürlichen oder synthetischen Ursprungs, bedeutet. Insbesondere kann bei Verwendung mineralischer Trägermaterialien üblicherweise vollkommen auf eine Behandlung mit Brandschutzmitteln verzichtet werden.

Was das Aerogel anbelangt, welches gemäß dieser Ausführungsform der vorliegenden Erfindung verwendet wird, um in die Poren des porösen Trägermaterials eingelagert zu werden, so kann nahezu jedes Aerogel verwendet werden. Es hat sich jedoch bewährt, wenn Silica-Aerogele eingesetzt werden, insbesondere da diese besonders gute und dauerhafte Bindungen zu den porösen Trägermaterialien, insbesondere Gesteinen mit Silkatanteil, aufbauen können.

Gemäß dieser Ausführungsform der vorliegenden Erfindung weist das Aerogel üblicherweise eine Schüttdichte von 0,025 bis 0,30 g/cm³, insbesondere 0,03 bis 0,25 g/cm³, vorzugsweise 0,04 bis 0,22 g/cm³, bevorzugt 0,05 bis 0,15 g/cm³, auf.

Die Schüttdichte des Aerogels bezieht sich auf ein Aerogel, welches nicht direkt auf dem porösen Trägermaterial gebildet wurde, sondern unter ansonsten vergleichbaren Bedingungen, jedoch ohne Trägermaterial.

Was den Porendurchmesser des verwendeten Aerogels anbelangt, so kann dieser naturgemäß in weiten Bereichen variieren. Es hat sich jedoch bewährt, wenn das Aerogel einen mittleren Porendurchmesser von 10 bis 300 nm, insbesondere 40 bis 250 nm, vorzugsweise 60 bis 220 nm, bevorzugt 100 bis 200 nm, besitzt. In diesem Zusammenhang kann es gleichfalls vorgesehen sein, dass das Aerogel einen mittleren Porendurchmesser von weniger als 300 nm, insbesondere weniger als 250 nm, vorzugsweise weniger als 220 nm, bevorzugt weniger als 200 nm, besitzt. Aerogele mit mittleren Porendurchmessern in den vorgenannten Bereichen besitzen besonders gute Wärmedämmeigenschaften und sind gleichzeitig ausreichend mechanisch stabil.

Im Rahmen der vorliegenden Erfindung werden gemäß dieser Ausführungsform der vorliegenden Erfindung besonders gute Ergebnisse erhalten, wenn das Aerogel hydrophobiert ist. Es wird somit im Rahmen der vorliegenden Erfindung bevorzugt, wenn sowohl das Aerogel als auch das poröse Trägermaterial bzw. das poröse Kompositmaterial hydrophobiert sind, um eine Wasseraufnahme möglichst zu vermeiden.

Gemäß einer bevorzugten Ausführungsform der vorliegenden Erfindung weist das Aerogel einen Kontaktwinkel mit Wasser von 100 bis 170°, insbesondere 130 bis 165°, vorzugsweise 140 bis 165°, auf.

Besonders gute Ergebnisse werden im Rahmen der vorliegenden Erfindung erhalten, wenn das Aerogel auf dem porösen Trägermaterial und/oder in den Poren des porösen Trägermaterials, vorzugsweise in den Poren des porösen Trägermaterials, gebildet wird. Durch eine Bildung des Aerogels auf bzw. in dem porösen Trägermaterial wird eine besonders gute Durchdringung der Poren des Trägermaterials mit dem Aerogel erreicht, wodurch einerseits die Wärmedämmeigenschaften der resultierenden Kompositpartikel optimiert werden und andererseits das in den Poren eingelagerte Aerogel optimal geschützt und besonders gut an die Oberfläche des porösen Trägermaterials gebunden ist.

In diesem Zusammenhang hat es sich bewährt, wenn das Aerogel mittels eines Sol-Gel-Verfahrens erhalten wird. D. h. die Kompositpartikel sind erhältlich, indem ein Sol-Gel-Verfahren zur Herstellung von Silica-Aerogelen in Gegenwart des porösen Trägermaterials durchgeführt wird.

Ganz besonders gute Ergebnisse werden dabei erhalten, wenn während der Herstellung des Aerogels eine *in situ*-Hydrophobierung erfolgt. Eine *in situ*-Hydrophobierung bei der Herstellung des Aerogels führt einerseits dazu, dass ein hydrophobiertes Aerogel erhalten wird, andererseits wird auch die Oberfläche des porösen Trägermaterials in nur einem Arbeitsgang gleichfalls hydrophobiert. Dies ist insbesondere bei Verwendung mineralisch basierter poröser Trägermaterialien, welche eine hohe Hydrophilie aufweisen, vorteilhaft.

Die zuvor beschriebenen Kompositpartikel sind durch ein spezielles Herstellungsverfahren zugänglich, wobei
(a) in einem ersten Verfahrensschritt das poröse Trägermaterial einer Behandlung zur Vergrößerung des offenen Porenvolumens unterzogen wird und
(b) in einem auf den ersten Verfahrensschritt (a) folgenden zweiten Verfahrensschritt auf dem porösen Trägermaterial und/oder in den Poren des porösen Trägermaterials, vorzugsweise auf dem porösen Trägermaterial und in den Poren des porösen Trägermaterials, ein Aerogel, insbesondere ein Silica-Aerogel, gebildet wird.

Wie zuvor bereits ausgeführt, erlaubt die Bildung bzw. Herstellung des Aerogels auf bzw. in dem porösen Trägermaterial eine besonders innige Verbindung zwischen Trägermaterial und Aerogel, welche mit besonders guten Wärmedämmeigenschaften der resultierenden Kompositpartikel einerseits und einem besonders guten Schutz des Aerogels andererseits einhergeht. Darüber hinaus wird durch die Bildung des Aerogels auf bzw. in dem porösen Trägermaterial auch eine möglichst weitgehende Durchdringung des porösen Trägermaterials mit dem Aerogel erreicht.

Wie nunmehr gezeigt werden konnte, werden bei der Herstellung von porösen Kompositpartikeln, deren Poren ein Aerogel enthalten, deutlich bessere Ergebnisse erhalten, wenn das poröse Trägermaterial einer Behandlung zur Vergrößerung des offenen Porenvolumens, d. h. des Volumens an Poren, welche mit der Umgebung in Kontakt stehen, unterzogen wird. Auf diese Weise wird es möglich, poröse Kompositpartikel, deren Poren zur verbesserten Wärmedämmung ein Aerogel enthalten, auch im technischen und großtechnischen Maßstab reproduzierbar herzustellen.

Üblicherweise wird das offene Porenvolumen des porösen Trägermaterials im Rahmen dieser Ausführungsform der vorliegenden Erfindung durch mechanische und/oder chemische, vorzugsweise mechanische, Behandlung des porösen Trägermaterials vergrößert.

Wenn das poröse Trägermaterial einer mechanischen Behandlung zur Vergrößerung des offenen Porenvolumens unterzogen wird, so hat es sich bewährt, wenn das poröse Trägermaterial in Verfahrensschritt (a) einem Mahlvorgang, insbesondere in einer Kugelmühle, unterworfen wird. Das Mahlen des porösen Trägermaterials, insbesondere in einer Kugelmühle, stellt eine sehr einfache und kostengünstige Variante zur Erhöhung des offenen Porenvolumens dar. Es hat sich gezeigt, dass durch den Mahlvorgang nicht nur allein die Partikel des porösen Trägermaterials zerkleinert und somit die spezifische Oberfläche erhöht wird, sondern dass auch durch die mechanische Einwirkung ein größerer Anteil an offenen Poren für die nachfolgende Bildung des Aerogels zur Verfügung steht.

Wenn das poröse Trägermaterial einer chemischen Behandlung zur Vergrößerung des offenen Porenvolumens unterzogen wird, so wird das poröse Trägermaterial in Verfahrensschritt (a) üblicherweise mit einer Lauge, insbesondere einer wässrigen Lösung eines Alkalimetall- und/oder Erdalkalimetallhydroxid, vorzugsweise eines Alkalimetallhydroxids, behandelt. In diesem Rahmen wird es besonders bevorzugt, wenn das Alkalimetallhydroxid ausgewählt ist aus Natriumhydroxid und/oder Kaliumhydroxid. Im Rahmen der vorliegenden Erfindung werden somit vorzugsweise Natronlauge bzw. Kalilauge für die chemische Behandlung des porösen Trägermaterials verwendet.

Üblicherweise weist die Lösung das Alkalimetall- und/oder Erdalkalimetallhydroxid in Mengen von 50 bis 60 Gew.-%, insbesondere 10 bis 40 Gew.-%, vorzugsweise 10 bis 30 Gew.-%, bezogen auf die Lösung, auf.

Darüber hinaus hat es sich im Rahmen der vorliegenden Erfindung bewährt, wenn das poröse Trägermaterial mit der Lauge bei erhöhter Temperatur, insbesondere bei Temperaturen im Bereich von 30 bis 80 °C, insbesondere 35 bis 70 °C, vorzugsweise 40 bis 60 °C, behandelt wird.

Es hat sich gezeigt, dass bei höheren Temperaturen die Lauge deutlich reaktiver ist und dass das offene Porensystem des porösen Trägermaterials deutlich schneller und in größerem Umfang erweitert wird.

Falls im Rahmen dieser Ausführungsform der vorliegenden Erfindung die Behandlung zur Vergrößerung des offenen Porenvolumens des porösen Trägermaterials auf chemischem Wege durchgeführt wird, so hat es sich bewährt, wenn im Anschluss an den eigentlichen Verfahrensschritt (a) das chemische Behandlungsmittel, insbesondere die Lauge, rückstandsfrei entfernt wird. Dies geschieht vorzugsweise durch wiederholtes Waschen mit vollentsalztem Wasser. In diesem Zusammenhang hat es sich bewährt, wenn 1 bis 10 Waschvorgänge, insbesondere 2 bis 7 Waschvorgänge, vorzugsweise 3 bis 5 Waschvorgänge vorgenommen werden. Eine gründliche Entfernung von Rückständen des bei der chemischen Behandlung eingesetzten Reagenzes, insbesondere von Kali- bzw. Natronlauge, ist oftmals vonnöten, da bei der Bildung von Aerogel die Einhaltung eines bestimmten pH-Wertbereiches kritisch ist. Nicht aus dem System entfernte Laugenrückstände verhindern die Einstellung eines stabilen pH-Wertes und können somit die Bildung des Aerogels erschweren bzw. verhindern.

Im Rahmen dieser Ausführungsform der vorliegenden Erfindung hat es sich bewährt, wenn das Sol zu einem Zeitpunkt mit dem porösen Trägermaterial in Kontakt gebracht wird, bei welchen das Sol nur noch zum Gel altern muss, d. h. nur noch die Polymerisationsreaktion vollzogen werden muss.

In diesem Zusammenhang hat es sich als vorteilhaft erwiesen, wenn das poröse Trägermaterial mit dem Hydrosol getränkt wird. Das Sol dringt folglich in sämtliche (offenen) Poren des porösen Trägermaterials ein und füllt diese möglichst vollständig aus.

Gleichermaßen hat es sich als vorteilhaft erwiesen, wenn nach Inkontaktbringen bzw. Durchdringen des Trägermaterials mit dem Sol das Sol zu einem Gel umgesetzt wird. Dieser Prozess wird auch als "altern" bezeichnet und beschreibt den Vorgang der Polymerisations- bzw. Kondensationsreaktionen der einzelnen Moleküle des Sols zu Makromolekülen, dem sogenannten Gel.

Das erhaltene Gel, insbesondere Hydrogel, muss anschließend noch zum Aerogel getrocknet werden. Dies kann beispielsweise in einem Autoklaven unter überkritischen Bedingungen erfolgen. Auch ist die Überführung von Hydrogelen in Alkogele durch Lösemittelaustausch, insbesondere von Wasser gegen Alkohol, möglich, was eine Entfernung des Lösemittels unter schonenderen Bedingungen, jedoch gleichfalls im überkritischen Bereich, erlaubt. Auch das Ersetzen des Lösemittels bzw. der Lösemittelgemische durch Kohlendioxid und eine nachfolgende überkritische Trocknung ist möglich. Diese Varianten sind alle technisch möglich, jedoch apparativ aufwendig. Im Rahmen der vorliegenden Erfindung ist auch eine einfache Entfernung des Löse- bzw. Dispersionsmittel bei erhöhter Temperatur möglich, wobei gleichfalls sehr gute Ergebnisse erhalten werden.

Besonders bevorzugt wird es in diesem Zusammenhang, wenn Wasser als einziges Löse- und Dispersionsmittel verwendet wird, wie nachfolgend noch dargelegt wird.

Im Rahmen dieser Ausführungsform der vorliegenden Erfindung werden besonders gute Ergebnisse erhalten, wenn das Hydrogel hydrophobiert wird. In diesem Zusammenhang hat es sich bewährt, wenn das Hydrogel durch Behandlung, insbesondere chemische Reaktion, mit mindestens einem Hydrophobierungsmittel hydrophobiert wird. Eine Hydrophobierung des Aerogels ermöglicht einen Austausch von polaren Lösemitteln, insbesondere Wasser, gegen weniger polare Lösemittel, welche dann unter erhöhter Temperatur und/oder vermindertem Druck entfernt werden können, ohne dass eine Trocknung im überkritischen Bereich notwendig wäre. Aber auch eine überkritische Trocknung des hydrophobierten Aerogels mit Kohlendioxid ist möglich und stellt ein besonders rasches und schonendes Trocknungsverfahren dar.

Darüber hinaus hat eine Hydrophobierung des Aerogels den weiteren Vorteil, dass durch die Poren des porösen Trägermaterials keine Feuchtigkeit, insbesondere kein flüssiges Wasser, in die Kompositpartikel eindringen kann. In diesem Zusammenhang wird es besonders bevorzugt, wenn die äußere Oberfläche des porösen Trägermaterials, welche nicht mit Aerogelen besetzt ist, gleichfalls hydrophobiert wird.

Weiterhin wird es bevorzugt, wenn während der Bildung des Gels eine Hydrophobierung, insbesondere eine *in situ*-Hydrophobierung, des Gels durchgeführt wird. Eine *in situ*-Hydrophobierung des Gels ermöglicht es, die Oberfläche bzw. die Porenstruktur des Aerogels derart auszubilden, dass die Wechselwirkung mit polaren Stoffen, insbesondere Wasser, derart geschwächt wird, dass eine Entfernung dieser polaren Stoffe durch Erhitzen bzw. Verwendung von Vakuum möglich wird, ohne dass die Aerogel-Struktur zerstört wird. Dies ermöglicht es bei Auswahl geeigneter Hydrophobierungsmittel, die gesamte Aerogelsynthese in wässrigem Medium durchzuführen. Darüber hinaus wird durch eine *in situ*-Hydrophobierung des Aerogels auch eine gleichzeitige Hyrophobierung der Oberfläche des porösen Trägermaterials erreicht.

Durch eine Hydrophobierung kann - wie zuvor ausgeführt - die Wechselwirkung zwischen Oberflächen des Gels und polaren Stoffen, wie beispielsweise Alkoholen oder Wasser, derart geschwächt werden, dass bei Trocknung ein problemloses Entfernen des Löse- bzw. Dispersionsmittels möglich wird, ohne dass die Aerogel-Struktur zerstört wird. Dies ist ungewöhnlich, da insbesondere bei der Herstellung von Silica-Aerogelen, in der Regel ein langwieriger Lösemittelaustausch von Alkohol oder Wasser gegen unpolarere Lösemittel vorgenommen werden muss, um eine vollständige Entfernung der Löse- und Dispersionsmittel zu erzielen. Wird hingegen versucht, das Hydrogel zu trocknen, so wird die Porenstruktur des Gels durch die hohen Kapillarkräfte zerstört. Oftmals muss sogar das gewonnene Hydrogel durch Lösemittelaustausch mit Alkoholen erst in einen Alkogel überführt werden, ehe weitere Lösemittelwechsel durchgeführt werden können, welche schließlich zu einer Durchdringung der porösen Struktur des Gels mit Lösemitteln führen, die problemlos aus dem Gel entfernt werden können, so dass ein Aerogel erhalten wird. Durch eine *in situ-*Hydrophobierung bzw. eine Hydrophobierung während der Bildung des Gels wird im Rahmen der vorliegenden Erfindung eine effiziente Hydrophobierung auch der inneren Grenz- bzw. Oberflächen, insbesondere der Poren, des Aerogels erreicht, so dass eine weitgehend zerstörungsfreie Entfernung von Wasser aus dem Porensystem des Aerogels möglich wird.

Weiterhin hat es sich bewährt, wenn das Gel in Gegenwart des Hydrophobierungsmittels gebildet wird.

Besonders gute Ergebnisse werden dabei erhalten, wenn das Hydrophobierungsmittel ausgewählt ist aus Phosphonaten, Sulfonaten, substituierten Aminen, Silanen, Polysiloxanen, Silikonaten, Carbonsäurederivaten, Ethoxylaten, Polyethern, insbesondere Silanen, Polysiloxanen und Silikonaten, sowie deren Mischungen. Insbesondere bei Verwendung von Silanen, Silikonaten und Polysiloxanen, vorzugsweise Silanen und Silikonaten, als Hydrophobierungsmittel ist eine besonders gleichmäßige Einarbeitung in das sich bildende Gelmaterial, insbesondere in Silica-Hydrogele, möglich, wodurch eine wirkungsvolle Oberflächenmodifizierung sämtlicher, d. h. auch innerer, Oberflächen des Gels erreicht werden kann. Dieser Effekt ist insbesondere bei Silanen und Silikonaten besonders ausgeprägt. Darüber hinaus eignen sich Silane, Silikonate und Polysiloxane auch in hervorragender Weise zur Oberflächenmodifizierung, insbesondere Hydrophobierung, von mineralischen bzw. silikatbasierten porösen Trägermaterialien, welche im Rahmen der vorliegenden Erfindung bevorzugt eingesetzt werden.

Wenn im Rahmen dieser Ausführungsform der vorliegenden Erfindung ein Polysiloxan als Hydrophobierungsmittel verwendet wird, kann dessen chemische Natur in weiten Bereichen variieren. In diesem Zusammenhang wird es bevorzugt, wenn ein Polysiloxan mit reaktiven funktionellen Gruppen, insbesondere ausgewählt aus Hydroxyfunktionen, Aminen und/oder Carbonsäuren, eingesetzt wird.

Weiterhin hat es sich bewährt, wenn gemäß dieser Ausführungsform der vorliegenden Erfindung ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird.

Wenn im Rahmen dieser Ausführungsform der vorliegenden Erfindung ein Silan als Hydrophobierungsmittel eingesetzt wird, so kann dessen chemische Natur gleichfalls in weiten Bereichen variieren. Besonders gute Ergebnisse werden jedoch erhalten, wenn ein Silan der allgemeinen Formel I

R¹ₙSiR²₄₋ₙ (I)

mit
- n: = 1 bis 3, insbesondere 1 oder 2, vorzugsweise 1;
- R¹: = C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl; und
- R²: = Halogenid, insbesondere Chlorid, Bromid und/oder lodid, OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird. Besonders bevorzugt wird es dabei im Rahmen der vorliegenden Erfindung wenn R² OX, insbesondere Ethoxy, entspricht.

Für den Fall, dass im Rahmen dieser Ausführungsform der vorliegenden Erfindung ein Silikonat als Hydrophobierungsmittel eingesetzt wird, so kann eine Vielzahl von Silikonaten verwendet werden. Besonders gute Ergebnisse werden jedoch erhalten, wenn ein Silikonat der allgemeinen Formel II

HO-[Si(R)(OM)-O-]ₙH (II)

mit
- n: = 1 bis 6, insbesondere 1 bis 3, vorzugsweise 1;
- R: = C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl; und
- M: = einwertiges Metall, insbesondere Alkalimetall, vorzugsweise Natrium oder Kalium;
verwendet wird. In diesem Zusammenhang hat es sich bewährt, wenn das Hydrophobierungsmittel ausgewählt ist aus Natriummethylsilikonat, Kaliummethylsilikonat, Natriumpropylsilikonat und Kaliumpropylsilikonat und deren Mischungen. Gemäß einer bevorzugten Ausführungsform der vorliegenden Erfindung ist das Hydrophobierungsmittel Kaliummethylsilikonat.

Darüber hinaus wird es bevorzugt, wenn ein vorsichtiges Mischen zwischen dem porösen Trägermaterial und dem Sol unter geringer bis mittlerer Scherbeanspruchung stattfindet.

Gemäß dieser bevorzugten Ausführungsform der vorliegenden Erfindung wird zur Durchführung des Verfahrens, insbesondere in Verfahrensschritt (b), vorzugsweise nur ein Löse- oder Dispersionsmittel verwendet.

Die Verwendung nur eines Lösemittels im Verlauf des erfindungsgemäßen Verfahrens vereinfacht die Verfahrensführung ganz erheblich, da bei der Herstellung von Aerogelen, insbesondere von Silica-Aerogelen, oftmals mehrere Lösemittelwechsel vorgenommen werden müssen. Ein mehrmaliger Lösemittelwechsel führt einerseits zu einem verfahrenstechnisch erhöhten Aufwand, andererseits wird auch die Entsorgung der Lösemittelreste bzw. Dispersionsmittelreste deutlich erschwert, da diese oftmals getrennt gesammelt und entsorgt werden müssen.

Im Rahmen dieser Ausführungsform der vorliegenden Erfindung wird somit vorzugsweise nur ein einziges Lösemittel, insbesondere Wasser verwendet. Dies bedeutet, dass beispielsweise Lösungen oder Dispersionen, welche in Verfahrensschritt (b) verwendet werden, stets ein und das gleiche Lösemittel, vorzugsweise Wasser, aufweisen.

Im Allgemeinen wird gemäß dieser Ausführungsform der vorliegenden Erfindung als Löse- oder Dispersionsmittel ein polares Löse- oder Dispersionsmittel, insbesondere ein polares protisches Löse- oder Dispersionsmittel, verwendet.

In diesem Zusammenhang hat es sich bewährt, wenn das Löse- oder Dispersionsmittel ausgewählt ist aus der Gruppe von Alkoholen, insbesondere C₁- bis C₈-Alkoholen, Aminen und Wasser, insbesondere Methanol, Ethanol, Propanol und Wasser, vorzugsweise Ethanol und Wasser. Besonders bevorzugt wird es, wenn das Löse- oder Dispersionsmittel Wasser ist. Ein Vorteil der Verwendung von Wasser ist, dass es weder giftig noch unter den Gesichtspunkten des Umweltschutzes bedenklich ist. Darüber hinaus ist Wasser nichtbrennbar und problemlos zu entsorgen.

Gemäß dieser bevorzugten Ausführungsform der vorliegenden Erfindung wird Verfahrensschritt (b) vorzugsweise in mehreren Verfahrensstufen durchgeführt, wobei
(i) in einer ersten Verfahrensstufe (i) ein poröses Trägermaterial mit einem Sol, insbesondere einem Hydrosol, in Kontakt gebracht wird, insbesondere getränkt wird; und
(ii) in einer nachfolgenden zweiten Verfahrensstufe (ii) das Sol zu einem Gel, insbesondere einem Hydrogel, umgesetzt wird.

Üblicherweise wird in einer vorbereitenden, der Verfahrensstufe (i) vorgelagerten, Verfahrensstufe mindestens ein Sol, insbesondere ein Hydrosol, hergestellt.

Im Allgemeinen wird gemäß dieser Ausführungsform der vorliegenden Erfindung das Sol aus einer Lösung oder Dispersion mindestens eines Prekursors hergestellt. In diesem Zusammenhang hat es sich bewährt, wenn die Lösung oder Dispersion den Prekursor in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält. In den zuvor genannten Konzentrationsbereichen wird eine besonders gleichmäßige Polymerisation bzw. Kondensation der Solmoleküle bzw. -partikel erreicht, so dass ein besonders homogenes Gel, insbesondere Hydrogel, erhalten wird.

Das Sol, insbesondere das Hydrosol, kann im Rahmen der vorliegenden Erfindung aus einer Vielzahl von möglichen Prekusorverbindungen hergestellt werden. Besonders gute Ergebnisse werden jedoch erhalten, wenn ein Hydrosol auf Basis von Monokieselsäure und/oder kolloidaler Kieselsäure aus einer Alkalisilikat-Lösung, insbesondere Natriumsilikat-Lösung, als Prekursor hergestellt wird.

Wenn im Rahmen dieser Ausführungsform der vorliegenden Erfindung das Hydrosol aus einer Alkalisilikat-Lösung hergestellt wird, so hat es sich bewährt, wenn das Hydrosol durch Umsetzung der Alkalisilikat-Lösung mit Mineralsäuren, insbesondere Salzsäure, Salpetersäure und/oder Schwefelsäure, oder durch lonenaustausch, vorzugsweise durch lonenaustausch, hergestellt wird.

Besonders gute Ergebnisse werden in diesem Zusammenhang erhalten, wenn der lonenaustausch mit einem stark sauren Kationenaustauscherharz, insbesondere einem sulfonierten Polystyrolharz, vorzugsweise einem sulfonierten divinylbenzolvernetzten Polystyrolharz, durchgeführt wird. Die Verwendung von Ionenaustauschern, insbesondere auf Basis von sulfonierten divinylbenzolvernetzten Polystyrolharzen, führt zu besonders reinen Hydrosolen, welche nahezu frei sind von Salzen, insbesondere störenden Ionen, welche die Polymerisation des Aerogels behindern bzw. zu Fehlstellen im Gel führen.

Weiterhin hat es sich bewährt, wenn das Sol nach seiner Herstellung einen pH-Wert im Bereich von 1 bis 6, insbesondere 2 bis 4, vorzugsweise 2 bis 3, aufweist. Gleichermaßen werden im Rahmen der vorliegenden Erfindung gute Ergebnisse erhalten, wenn das Sol einen pH-Wert von weniger als 6, insbesondere weniger als 4, insbesondere weniger als 3, aufweist. Mit den vorgenannten pH-Werten wird eine besonders homogene Verteilung von nach Möglichkeit niedermolekularen Solmolekülen bzw. -partikeln erzielt.

Darüber hinaus ist es vorteilhaft, wenn das Sol eine Leitfähigkeit bei 20 °C von höchstens 1.500 µS/cm, insbesondere höchstens 1.000 µS/cm, vorzugsweise höchstens 800 µS/cm, aufweist. Gleichfalls werden besonders gute Ergebnisse erhalten, wenn das Sol eine Leitfähigkeit bei 20 °C im Bereich von 100 bis 1.500 µS/cm, insbesondere 200 bis 1.000 µS/cm, vorzugsweise 300 bis 800 µS/cm, aufweist. Geringe Leitfähigkeitswerte zeigen an, dass das Sol weitgehend frei ist von Ionen, insbesondere von Fremdionen, welche die anschließende Polymerisation bzw. Kondensation zum Gel negativ beeinflussen.

Üblicherweise wird Verfahrensstufe (i) bei Raumtemperatur oder in einem Temperaturbereich von 15 bis 30 °C, insbesondere von 20 bis 25 °C, durchgeführt.

Im Rahmen dieser Ausführungsform der vorliegenden Erfindung hat es sich bewährt, wenn Verfahrensstufe (i) unter erhöhtem Druck, insbesondere bei einem Absolutdruck von 2 bis 12 bar, insbesondere 3 bis 10 bar, vorzugsweise 4 bis 9 bar, bevorzugt 6 bis 8 bar, durchgeführt wird.

In diesem Zusammenhang hat es sich insbesondere bewährt, wenn Verfahrensstufe (i) nicht dauerhaft unter erhöhtem Druck durchgeführt wird. Besonders gute Ergebnisse werden erhalten, wenn in Verfahrensstufe (i) der Druck in Intervallen, insbesondere in 2 bis 50 Intervallen, vorzugsweise 5 bis 40 Intervallen, bevorzugt 8 bis 30 Intervallen, besonders bevorzugt 10 bis 20 Intervallen, erhöht wird. Hierbei wird es bevorzugt, wenn der Druck ausgehend vom Umgebungsdruck bzw. von Normaldruck erhöht wird.

Gemäß dieser Ausführungsform der vorliegenden Erfindung werden insbesondere dann gute Ergebnisse erhalten, wenn während eines Intervalls die Mischung aus Sol und porösen Partikeln für einen Zeitraum von 1 bis 20 Minuten, insbesondere 5 bis 10 Minuten, erhöhtem Druck ausgesetzt wird, insbesondere unter leichter Bewegung, wie beispielsweise unter Rühren. Vorzugsweise wird Verfahrensstufe (i) anschließend für einen Zeitraum von 1 bis 60 Minuten, insbesondere 5 bis 50 Minuten, vorzugsweise 10 bis 40 Minuten, bevorzugt 20 bis 30 Minuten, bei Normaldruck bzw. Umgebungsdruck durchgeführt, insbesondere wobei die Mischung aus Sol und porösen Partikeln bei Normaldruck bzw. Umgebungsdruck ruhen gelassen wird.

Der pH-Wert des Sols wird, insbesondere zur Gelbildung, vorzugsweise im Bereich von 3,5 bis 7, insbesondere 3,5 bis 6,5, vorzugsweise 4 bis 6, bevorzugt 4 bis 5 eingestellt. Im vorgenannten Bereich findet eine besonders gleichmäßige und kontrollierte Polymerisation bzw. Kondensation des Sols zum Gel, insbesondere von Silica-Hydrosolen zu Hydrogelen, statt. Was nun die Einstellung des pH-Wertes, insbesondere in Verfahrensstufe (i), anbelangt, so kann diese auf vielfältige Art und Weise erfolgen. Besonders gute Ergebnisse werden im Rahmen der vorliegenden Erfindung jedoch erhalten, wenn der pH-Wert durch Zugabe einer Base, insbesondere durch Zugabe von Natronlauge, Kalilauge und/oder wässriger Ammoniak-Lösung, vorzugsweise wässriger Ammoniak-Lösung, eingestellt wird. Die Verwendung von Ammoniak-Lösung hat insbesondere den Vorteil, dass die entstehenden Ammoniumionen die Polymerisation bzw. Kondensation des Sols zum Gel nicht negativ beeinflussen und darüber hinaus nicht in die Gelstruktur eingebaut werden, wie beispielsweise Natrium- oder Kaliumionen.

Gleichfalls kann es vorgesehen sein, dass der pH-Wert durch Zugabe von Säure, insbesondere einer Mineralsäure, vorzugsweise Salzsäure, eingestellt wird. Eine Einstellung des pH-Werts durch Zugabe von Säuren kann insbesondere notwendig sein, wenn stark basische Hydrophobierungsmittel verwendet werden.

Weiterhin wird es bevorzugt, wenn in Verfahrensstufe (i) das Sol mit mindestens einem Hydrophobierungsmittel in Kontakt gebracht, insbesondere versetzt, wird.

Im Allgemeinen wird das Hydrophobierungsmittel im Rahmen dieser Ausführungsform der vorliegenden Erfindung in Form einer Lösung oder Dispersion, insbesondere einer wässrigen Lösung oder Dispersion, eingesetzt. Was in diesem Zusammenhang die Konzentration des Hydrophobierungsmittels in der Lösung oder Dispersion anbelangt, so kann diese in weiten Bereichen variieren. Besonders gute Ergebnisse werden jedoch erhalten, wenn die Lösung oder Dispersion das Hydrophobierungsmittel in Mengen von 1 bis 90 Gew.-%, insbesondere 10 bis 80 Gew.-%, vorzugsweise 30 bis 70 Gew.-%, bevorzugt 40 bis 60 Gew.-%, bezogen auf die Lösung oder Dispersion des Hydrophobierungsmittels, enthält.

Besonders gute Ergebnisse werden gemäß dieser Ausführungsform der vorliegenden Erfindung erhalten, wenn das gewichtsbezogene Verhältnis von Solpartikeln zu Hydrophobierungsmittel im Bereich von 10 : 1 bis 1 : 20, insbesondere 5 : 1 bis 1 : 10, vorzugsweise 3 : 1 bis 1 : 5, bevorzugt 2 : 1 bis 1 : 4, besonders bevorzugt 1 : 1 bis 1 : 3, variiert wird. In den vorgenannten Verhältnissen werden besonders stabile Aerogele erhalten, welche durch Trocknen problemlos von Lösemittelresten bzw. Dispersionsmittelresten, insbesondere Wasser, befreit werden können. Unter Solpartikeln sind dabei die gelösten bzw. dispergierten Teilchen des Sols, insbesondere der Kieselsäure, zu verstehen.

Darüber hinaus wird es bevorzugt, wenn - insbesondere in Verfahrensstufe (i) - das Sol mit dem Hydrophobierungsmittel in Kontakt gebracht wird bevor das poröse Trägermaterial mit dem Sol in Kontakt gebracht wird. Es hat sich herausgestellt, dass beste Ergebnisse erzielt werden, wenn die Reaktionsmischung zur Herstellung des Gels, insbesondere des Hydrogels, soweit fertiggestellt ist, dass nur noch durch Temperaturerhöhung und Altern die Bildung des Gels abzuwarten bleibt, ehe das vorbereitete Sol mit dem porösen Trägermaterial in Kontakt gebracht wird.

Die Zugabe des Hydrophobierungsmittels zu dem Sol erfolgt vorzugsweise über mehrere Minuten unter leichter Scherbeanspruchung.

Im Rahmen dieser Ausführungsform der vorliegenden Erfindung wird es darüber hinaus bevorzugt, wenn - insbesondere in Verfahrensstufe (i) - die Einstellung des pH-Wertes erfolgt, nachdem das Sol mit dem Hydrophobierungsmittel in Kontakt gebracht wurde. In diesem Zusammenhang werden besonders gute Ergebnisse erhalten, wenn die Einstellung des pH-Wertes 0,1 bis 60 min, vorzugsweise 0,5 bis 30 min, bevorzugt 0,5 bis 15 min, erfolgt, nachdem das Sol mit dem Hydrophobierungsmittel in Kontakt gebracht wurde. Durch eine Einstellung des pH-Wertes wird die Polymerisations- bzw. Kondensationsreaktion im Sol in Gang gesetzt.

Üblicherweise wird gemäß dieser Ausführungsform der vorliegenden Erfindung - insbesondere in Verfahrensstufe (i) - das poröse Trägermaterial zu dem Sol gegeben, insbesondere unter Rühren. Es ist jedoch auch möglich, das Sol vorsichtig zu dem porösen Trägermaterial zuzugeben. Es wird jedoch bevorzugt, das poröse Trägermaterial langsam zu dem Sol zu geben.

Das gewichtsbezogene Verhältnis von porösem Trägermaterial zu Hydrosol liegt dabei üblicherweise im Bereich von 5 : 1 bis 1 : 20, insbesondere 3 : 1 bis 1 : 15, vorzugsweise 1 : 1 bis 1 : 10, bevorzugt 1 : 1 bis 1 : 5.

Was nun die Dauer anbelangt, in welcher das Sol - insbesondere in Verfahrensstufe (i) - und das poröse Trägermaterial in Kontakt gebracht werden, so kann dieser Zeitraum in weiten Bereichen variieren. Besonders gute Ergebnisse werden jedoch erhalten, wenn das Sol und das poröse Trägermaterial für mindestens 1 Stunde, insbesondere mindestens 2 Stunden, vorzugsweise mindestens 3 Stunden, bevorzugt mindestens 6 Stunden, in Kontakt gebracht werden. Gleichfalls hat es sich bewährt, wenn das Sol und das poröse Trägermaterial für höchstens 24 Stunden, insbesondere höchstens 18 Stunden, vorzugsweise höchstens 15 Stunden, bevorzugt höchstens 12 Stunden, in Kontakt gebracht werden. In diesem Zusammenhang kann es gleichfalls vorgesehen sein, dass das Sol und das poröse Trägermaterial für einen Zeitraum von 1 bis 24 Stunden, insbesondere 2 bis 18 Stunden, vorzugsweise 3 bis 15 Stunden, bevorzugt 6 bis 12 Stunden, in Kontakt gebracht werden. Die Dauer des Inkontaktbringens ist dabei unter anderem abhängig von der Art des verwendeten Hydrophobierungsmittels, der Korngröße des porösen Trägermaterials sowie der Porenstruktur, insbesondere der Porengrößenverteilung, der porösen Trägermaterials.

Wenn ein Inkontaktbringen des Sols und des porösen Trägermaterials in vorbeschriebenen Zeiträumen durchgeführt wird, so wird eine vollständige Durchdringung des porösen Trägermaterials mit dem Sol gewährleistet, was bei der anschließenden Gelbildung zu einer möglichst vollständigen Befüllung der Poren des porösen Trägermaterials mit Aerogel führt.

Was die Temperatur anbelangt, bei welcher - insbesondere in Verfahrensstufe (i) - das Sol und das poröse Trägermaterial in Kontakt gebracht werden, so kann diese naturgemäß in weiten Bereichen variieren. Besonders gute Ergebnisse werden jedoch erhalten, wenn das Sol und das poröse Trägermaterial bei Raumtemperaturin Kontakt gebracht werden. In diesem Zusammenhang hat es sich bewährt, wenn das Sol und das poröse Trägermaterial im Temperaturbereich von 15 bis 30 °C, insbesondere 20 bis 25 °C, in Kontakt gebracht werden.

Ein Inkontaktbringen des Sols und des porösen Trägermaterials bei Raumtemperatur hat den Vorteil, dass die Gelbildung nur sehr langsam voranschreitet, so dass das poröse Trägermaterial vollständig von dem Hydrosol durchdrungen werden kann. Eine zu rasche Gelbildung würde verhindern, dass das Sol bzw. Gel weit in die Poren eindringt bzw. auch kleinere Poren ausfüllt.

Wie zuvor bereits dargelegt, hat es sich im Rahmen dieser Ausführungsform der vorliegenden Erfindung bewährt, wenn das Sol und das poröse Trägermaterial - insbesondere in Verfahrensstufe (i) - unter erhöhtem Druck in Kontakt gebracht wird, insbesondere wobei der erhöhte Druck in Intervallen angewendet wird und vorzugsweise ein mehrmaliger Druckaufbau vorgenommen wird. Hierdurch wird insbesondere gewährleistet, dass das poröse Trägermaterial rasch und vollständig von dem Sol durchdrungen wird.

Im Rahmen dieser Ausführungsform der vorliegenden Erfindung ist es im Allgemeinen vorgesehen, dass in Verfahrensstufe (ii) die Mischung auf Temperaturen im Bereich von 30 bis 90 °C, insbesondere 35 bis 85 °C, bevorzugt 40 bis 80 °C, besonders bevorzugt 50 bis 75 °C, besonders bevorzugt 60 bis 70 °C, erwärmt wird. Eine Erwärmung in Verfahrensstufe (ii) ermöglicht eine rasche Gelbildung, insbesondere in den Poren des porösen Trägermaterials.

In diesem Zusammenhang kann es weiterhin vorgesehen sein, dass die Mischung für 1 bis 100 Stunden, insbesondere 5 bis 85 Stunden, vorzugsweise 10 bis 70 Stunden, bevorzugt 20 bis 60 Stunden, besonders bevorzugt 24 bis 48 Stunden, bei der erhöhten Temperatur gehalten wird. Gleichfalls ist es möglich, dass die Mischung für weniger als 100 Stunden, insbesondere weniger als 85 Stunden, vorzugsweise weniger als 70 Stunden, bevorzugt weniger als 60 Stunden, besonders bevorzugt weniger als 48 Stunden, bei der erhöhten Temperatur gehalten wird.

Die vorgenannten Reaktionsdauern reichen üblicherweise aus, um eine vollständige Umsetzung des Sols zum Gel zu erzielen.

Im Rahmen dieser Ausführungsform der vorliegenden Erfindung ist es darüber hinaus üblicherweise vorgesehen, dass in einer auf Verfahrensstufe (ii) folgenden Verfahrensstufe (iii) das in Verfahrensstufe (ii) erhaltene Hydrogel zu einem Aerogel verarbeitet wird, insbesondere wobei die in Verfahrensstufe (ii) erhaltenen ein Gel enthaltenden Partikel isoliert und anschließend getrocknet werden.

Was nun die Trocknung des Gels zu einem Aerogel anbelangt, so kann dieses - wie zuvor ausgeführt - auf vielfältige Art und Weise geschehen. Es wird es jedoch bevorzugt, wenn die ein Hydrogel aufweisenden Partikel bei Temperaturen im Bereich von 20 bis 200 °C, insbesondere 30 bis 150 °C, vorzugsweise 40 bis 120 °C, bevorzugt 50 bis 100 °C, getrocknet werden. Gleichfalls werden besonders gute Ergebnisse erhalten, wenn die ein Hydrogel aufweisenden Partikel für eine Dauer von 8 bis 72 Stunden, insbesondere 12 bis 60 Stunden, vorzugsweise 24 bis 48 Stunden, getrocknet werden. Dies ist insbesondere auch bei der Verwendung von Wasser als einzigem Löse- bzw. Dispergiermittel möglich, falls eine geeignete Hydrophobierung des Aerogels vorgenommen wird. Bevorzugt wird die zuvor beschriebene thermische Trocknung bei Normal- bzw. Umgebungsdruck durchgeführt.

Besonders bevorzugt werden im Rahmen dieser Ausführungsform der vorliegenden Erfindung die ein Hydrogel aufweisenden Partikel einer überkritischen Trocknung mit Kohlenstoffdioxid unterzogen. Die überkritische Trocknung ist im Vergleich zur rein thermischen Trocknung sehr viel weniger zeitaufwendig und rascher durchzuführen, wodurch der erhöhte apparative Aufwand in ökonomischer Hinsicht kompensiert werden kann. Bei der Trocknung mit überkritischem Kohlenstoffdioxid wird das Löse- bzw. Dispergiermittel, insbesondere Wasser, sukzessive durch Kohlenstoffdioxid aus den Poren des Aerogels verdrängt bzw. in diesem gelöst und das Kohlenstoffdioxid nach vollständiger Sättigung des Gels mit Kohlenstoffdioxid in die Gasphase überführt.

Mit den zuvor beschriebenen Verfahren ist es möglich, die bevorzugt eingesetzten Kompositpartikel zu erhalten.

Wie gleichfalls schon ausgeführt, werden die im Rahmen der vorliegenden Erfindung gemäß einer weiteren bevorzugten Ausführungsform der vorliegenden Erfindung poröse Partikel mit geschlossenen Poren, welche ein wärmedämmendes Gas enthalten, in den erfindungsgemäßen Füllmassen und zur Durchführung des erfindungsgemäßen Verfahrens verwendet.

Denn, wie sich herausgestellt hat, lässt sich die Wärmeleitfähigkeit von porösen Materialien deutlich verbessern, wenn die Poren im Inneren des Materials mit einem wärmedämmenden Gas gefüllt sind. Auf diese Weise ist es möglich, die wärmedämmenden Eigenschaften des porösen Materials gegenüber vergleichbaren Materialien ohne wärmedämmende Gasfüllung deutlich zu verbessern. Das im Rahmen der vorliegenden Erfindung gemäß dieser Ausführungsform bevorzugt eingesetzte poröse Material ist insbesondere mineralisch basiert.

Das gemäß dieser Ausführungsform poröse mineralisch basierte Material zeichnet sich dadurch aus, dass zumindest ein Anteil seiner Gesamtporosität, d. h. das Verhältnis von Hohlraumvolumen zu Gesamtvolumen des Materials, zumindest teilweise durch geschlossene Poren gebildet wird.

Wie die Anmelderin in vollkommen überraschender Weise herausgefunden hat, ist es durch ein einfaches Verfahren möglich, die geschlossenen Poren eines porösen mineralisch basierten Materials bei ihrer Bildung mit einem wärmedämmenden Gas zu befüllen.

Unter dem wärmedämmenden Gas ist dabei im Rahmen der vorliegenden Erfindung ein Gas zu verstehen, dessen Wärmeleitfähigkeit geringer ist als die von Luft, welche bei 25 °C 0,0262 W/(m·K) beträgt. Das wärmedämmende Gas kann dabei eine Einzelsubstanz, aber auch ein Gasgemisch sein. Wenn im Rahmen der vorliegenden Erfindung Werte für Wärmeleitfähigkeiten angegeben werden, so beziehen sich diese üblicherweise auf die Wärmleitfähigkeit bei 25 °C.

Das gemäß dieser Ausführungsform der vorliegenden Erfindung eingesetzte poröse Material weist darüber hinaus auch Abriebfestigkeit und Bruchfestigkeiten auf, welche sich für eine Verwendung in Dämmstoffsystemen, beispielsweise Dämmputzen, Dämm- und Füllmassen oder Wärmedämmverbundsystemen eignen.

Die gemäß dieser Ausführungsform der vorliegenden Erfindung verwendeten porösen mineralisch basierten Partikel können als Füllstoff in einer Vielzahl von Anwendungen eingesetzt werden. Denkbar sind sämtliche Anwendungen, bei denen beispielsweise expandierter Vermiculit oder expandierter Perlit eingesetzt werden. Die porösen Partikel besitzen gegenüber diesen seit langem bekannten Füll- und Dämmstoffen den Vorteil, dass es bei gleichen mechanischen Eigenschaften eine deutlich verbesserte Wärmedämmung, d. h. eine kleinere Wärmeleitfähigkeit aufweist.

Was nun die Partikelgrößen der gemäß dieser Ausführungsform der vorliegenden Erfindung eingesetzten Partikel anbelangt, so kann diese naturgemäß in weiten Bereichen variieren. Es hat sich jedoch bewährt, wenn die Partikel des porösen Materials absolute Partikelgrößen im Bereich von 10 bis 5.000 µm, insbesondere 20 bis 4.000 µm, vorzugsweise 30 bis 3.000 µm, bevorzugt 40 bis 2.000 µm, besonders bevorzugt 50 bis 1.500 µm, aufweisen. Materialien mit den vorgenannten Partikelgrößen lassen sich besonders gut als Füllstoffe in Bindemittelsysteme einarbeiten, und zwar in Mengen von bis 70 Gew.-%, bezogen auf das System aus Bindemitteln und porösen Partikeln.

Die gemäß dieser Ausführungsform verwendeten porösen Partikel weisen im Allgemeinen Poren mit Porengrößen im Bereich von 0,05 bis 800 µm, insbesondere 0,1 bis 700 µm, vorzugsweise 0,5 µm bis 500 µm, bevorzugt 1 µm bis 300 µm, besonders bevorzugt 2 bis 200 µm, auf. Sowohl die offenen als auch die geschlossenen Poren der porösen Partikel gemäß dieser Ausführungsform weisen im Allgemeinen die vorgenannten Porengrößen auf.

Was nun die chemische Zusammensetzung der gemäß dieser Ausführungsform eingesetzten Partikel anbelangt, so können hier sämtliche geeigneten vorzugsweise mineralischen Stoffe verwendet werden. Es werden jedoch besonders gute Ergebnisse erhalten, wenn das Material der porösen Partikel ausgewählt ist aus der Gruppe von vulkanischem Gestein, Perlit, insbesondere expandiertem Perlit, Vermiculit, insbesondere expandiertem Vermiculit, Blähschiefer und deren Mischungen.

Besonders bevorzugt wird es in diesem Zusammenhang, wenn das Material ausgewählt ist aus Perlit, insbesondere expandiertem Perlit, und Vermiculit, insbesondere expandiertem Vermiculit, vorzugsweise Perlit, bevorzugt expandiertem Perlit.

Die zuvor genannten mineralischen Stoffe eignen sich in hervorragender Weise, um wärmedämmende Gase einzuschließen, da sie aus Ausgangsmaterialien gewonnen werden, welche unter Wärmeeinwirkung auf ein Vielfaches deren ursprünglichen Volumens expandieren, wobei sich ein Vielzahl von Poren in den Materialien bildet. Durch geeignete Wahl der Verfahrensbedingungen bei der Herstellung ist es möglich, dass wärmedämmende Gase gezielt in das Porensystem, insbesondere die geschlossenen Poren der Materialien eingebracht werden. Es entsteht somit im weitesten Sinne ein mineralischer Schaum, welcher gezielt mit wärmedämmenden Gasen gefüllt ist.

Üblicherweise weisen die porösen Partikel deren Poren mit einem wärmedämmenden Gas gefüllt sind die Brennbarkeit A1 oder A2 gemäß DIN 4102 auf. Da das poröse mineralisch basierte Material nach der Erfindung rein anorganisch basiert ist, weist es im Allgemeinen sogar die Brennbarkeit A1 gemäß DIN 4102 auf. Es ist jedoch möglich, das poröse Material einer Oberflächenbehandlung mit organischen

Materialien, insbesondere einer Hydrophobierung, zu unterziehen, um die Oberflächeneigenschaften gezielt einzustellen, beispielsweise um die Wasserresorption zu verringern bzw. die Kompatibilität mit organischen Bindemittelsystemen zu verbessern oder auch um die Durchlässigkeit gegenüber dem wärmedämmenden Gas einzustellen. In diesem Fall kann es sein, dass das im Rahmen der vorliegenden Erfindung verwendete poröse Material die Brennbarkeit A2 gemäß DIN 4102 aufweist. Das poröse Material gemäß dieser Ausführungsform der vorliegenden Erfindung weist somit im Vergleich zu kunststoffbasierten Materialien eine deutlich verringerte Brennbarkeit auf, und kann daher auch in Bereichen mit erhöhter Brandgefahr bzw. ohne weitere Brandschutzmaßnahmen verbaut werden.

Im Rahmen dieser Ausführungsform der vorliegenden Erfindung wird es darüber hinaus bevorzugt, wenn die porösen Partikel in loser Schüttung eine Wärmeleitfähigkeit bei 25 °C im Bereich von 0,02 bis 0,045 W/(mK), insbesondere 0,020 bis 0,040 W/(mK), vorzugsweise 0,022 bis 0,038 W/(mK), bevorzugt 0,025 bis 0,035 W/(mK), besonders bevorzugt 0,025 bis 0,030 W/(mK), aufweist.

Was nun das wärmedämmende Gas anbelangt, mit welchem die Poren porösen Partikel gefüllt sind, so kann dieses in Abhängigkeit von den jeweiligen Bedingungen, insbesondere den geplanten Anwendungen des erfindungsgemäßen Materials sowie wirtschaftlichen Erwägungen, ausgewählt werden.

Es hat sich jedoch bewährt, wenn das im Rahmen dieser Ausführungsform der vorliegenden Erfindung verwendete Gas ein Inertgas ist. Unter einem Inertgas ist im Rahmen der vorliegenden Erfindung ein Gas zu verstehen, welches unter Anwendungsbedingungen nicht reaktiv ist und weder mit Bestandteilen des mineralisch basierten porösen Materials reagiert noch beispielsweise bei Freisetzung aufgrund deiner Zerstörung der porösen Partikel mit Bestandteilen der Umgebung reagiert.

Üblicherweise ist das Gas ausgewählt aus der Gruppe der Edelgase und Kohlenstoffdioxid sowie deren Mischungen. Die vorgenannten Gase zeichnen sich zum einen durch äußerst geringe Wärmeleitfähigkeiten aus und darüber hinaus dadurch, dass sie äußerst reaktionsträge sind.

Besonders gute Ergebnisse werden in diesem Zusammenhang erhalten, wenn das Gas ausgewählt ist aus der Gruppe bestehend aus Argon, Krypton, Xenon und Kohlenstoffdioxid sowie deren Mischungen, insbesondere Argon und Kohlenstoffdioxid sowie deren Mischungen. Im Rahmen der vorliegenden Erfindung wird es besonders bevorzugt, wenn das Gas Argon ist.

Die zuvor genannten Gase weisen hervorragende Dämmeigenschaften auf, da sie äußerst geringe Wärmeleitfähigkeiten besitzen: So beträgt die Wärmeleitfähigkeit von Kohlenstoffdioxid 0,0168 W/(mK), die Wärmeleitfähigkeit von Argon 0,0179 W/(mK), die Wärmeleitfähigkeit von Krypton 0,0095 W/(mK) und die Wärmeleitfähigkeit von Xenon sogar nur 0,0055 W/(mK). Die genannten Gase besitzen somit hervorragende Dämmeigenschaften, wobei die Verwendung von Kohlenstoffdioxid und Argon besonders bevorzugt sind, da sie in großen Mengen und zu ökonomisch vertretbaren Kosten erhältlich sind. Argon hat darüber hinaus noch den Vorteil, dass es nicht nur nahezu unreaktiv ist, sondern auch ungiftig.

Im Rahmen dieser Ausführungsform der vorliegenden Erfindung ist es üblicherweise vorgesehen, dass die Poren der porösen Partikel durch Expansion eines Ausgangsmaterials erzeugt werden, insbesondere wobei die Expansion durch Wärmeeinwirkung stattfindet.

Insbesondere kann es auch vorgesehen sein, dass das Material gemäß dieser Ausführungsform der vorliegenden Erfindung oberflächenmodifiziert ist, insbesondere zumindest an seiner äußeren Oberfläche hydrophobiert ist. Eine Hydrophobierung kann beispielsweise erforderlich sein, um die Wasserresorption durch die vorzugsweise mineralisch basierten Partikel, welche üblicherweise hydrophil sind, zu verringern bzw. zu vermeiden.

Darüber hinaus kann durch eine gezielte Hydrophobierung, insbesondere durch eine Anbindung von organischen Funktionalitäten an die Oberfläche des mineralisch basierten Materials die Kompatibilität beispielsweise mit organischen Bindemitteln deutlich verbessert werden. Die Oberflächenmodifizierung, insbesondere Hydrophobierung, erfolgt dabei üblicherweise durch Umsetzung mit einem Oberflächenmodifizierungsmittel, insbesondere einem Hydrophobierungsmittel. Was nun die Auswahl des Oberflächenmodifizierungsmittels anbelangt, so sind hierfür sämtliche geeigneten Substanzen und Stoffe bzw. Stoffgemische verwendbar.

Im Rahmen dieser Ausführungsform der vorliegenden Erfindung kann es beispielsweise vorgesehen sein, dass die Oberflächenmodifizierung mittels Aerogelen, Phosphonaten, Sulfonaten, substituierten Aminen, Silanen, Polysiloxanen, Silikonaten, Carbonsäurederivaten, Ethoxylaten, Polyethern vorgenommen wird. Insbesondere ist dabei bevorzugt, wenn die Oberflächenmodifizierung mittels Silanen, Silikonaten und Polysiloxanen, vorzugsweise Silanen und Silikonaten, und/oder deren Mischungen erfolgt. Die zuvor genannten Hydrophobierungsmittel verfügen zum einen über organische Reste, welche eine Hydrophobierung der Oberflächen gewährleisten und darüber hinaus über polare Gruppen, welche mit dem mineralischen Material reagieren bzw. sich an dieses anlagern können.

Die gemäß dieser Ausführungsform der vorliegenden Erfindung verwendete poröse Partikel, deren geschlossenen Poren ein wärmedämmendes Gas aufweisen, können durch ein Verfahren hergestellt werden, bei welchem ein expandierfähiges mineralisches Ausgangsmaterial (Edukt), welches bei Expansion geschlossene Poren bildet, vorgelegt und in Gegenwart eines wärmedämmenden Gases expandiert wird.

Unter einem expandierfähigen Material ist dabei ein Material zu verstehen, dessen Volumen sich bei zumindest wesentlicher Beibehaltung des Gewichts unter bestimmten Umständen, beispielsweise unter Wärmeeinwirkung, vergrößern kann. Als Beispiel sei insbesondere Perlit genannt, welches bei Temperaturen von ca. 1.000 °C auf das 10- bis 20-fache seines ursprünglichen Volumens expandiert. Bei der Expansion nimmt somit die Dichte der Stoffe ab, wobei insbesondere Hohlräume in den jeweiligen Materialien gebildet werden. Diese Hohlräume werden gemäß dieser Ausführungsform der Erfindung mit wärmedämmenden Gasen gefüllt, um ein Material mit deutlich verbesserten Wärmedämmeigenschaften zu erhalten. Bei der Expansion können sowohl offene als auch geschlossene Poren gebildet werden, wobei es gemäß dieser Ausführungsform bevorzugt wird, wenn der Anteil geschlossener Poren möglichst hoch.

Gemäß dieser bevorzugten Ausführungsform der vorliegenden Erfindung ist es vorteilhaft, wenn bereits die Ausgangsprodukte in Partikelform vorliegen. Darüber hinaus ist bei der Verwendung partikelförmiger Ausgangsstoffe die spezifische Oberfläche des Ausgangsmaterials gegenüber beispielsweise größeren Formkörpern oder Blöcken deutlich erhöht, so dass eine sehr viel schnellere und vollständige Einlagerung des wärmedämmenden Gases in das Endprodukt möglich ist.

In diesem Zusammenhang hat es sich bewährt, wenn die Partikel des Ausgangsmaterials absolute Partikelgrößen im Bereich von 5 bis 1.000 µm, insbesondere 10 bis 800 µm, vorzugsweise 15 bis 700 µm, bevorzugt 20 bis 600 µm, besonders bevorzugt 40 bis 500 µm, aufweisen.

Was nun die Wahl des Ausgangsmaterials anbelangt, so hat es sich bewährt, wenn das Ausgangsmaterial ausgewählt ist aus natürlichen Gesteinen, insbesondere Vulkangesteinen.

Besonders gute Ergebnisse werden in diesem Zusammenhang erhalten, wenn das Ausgangsmaterial ausgewählt ist aus Perlit, Vermiculit, Tonschiefer und deren Mischungen, insbesondere Perlit, Vermiculit und deren Mischungen. Im Rahmen der vorliegenden Erfindung wird es besonders bevorzugt, wenn Perlit als Ausgangsmaterial verwendet wird, da Perlit eine besonders starke Expansion unter Wärmeeinwirkung aufweist und bereits in unmodifizierter Form, d. h. ohne Einbringung eines wärmedämmenden Gases, ein hervorragender Dämmstoff ist.

Was nun die Expansion des Ausgangsmaterials anbelangt, so können hier sämtliche geeignete Methode angewandt werden. Im Rahmen dieser Ausführungsform der vorliegenden Erfindung ist es jedoch üblicherweise vorgesehen, dass das Ausgangsmaterial unter erhöhter Temperatur, insbesondere unter Wärmeeinwirkung expandiert wird. Insbesondere die zuvor genannten natürlichen Gesteine bzw. Vulkangesteine expandieren bevorzugt unter Einwirkung von erhöhter Temperatur.

Was nun die Temperaturbereiche anbelangt, in welchen das Ausgangsmaterial expandiert, so ist dieses im starken Maße von den gewählten Ausgangsmaterialien abhängig. Es hat sich jedoch bewährt, wenn das Ausgangsmaterial bei Temperaturen im Bereich von 750 bis 1.300 °C, insbesondere 850 bis 1.200 °C, vorzugsweise 900 bis 1.100 °C, bevorzugt 950 bis 1.050 °C, expandiert wird.

Im Rahmen dieser Ausführungsform der vorliegenden Erfindung hat es sich bewährt, wenn das wärmedämmende Gas ein Inertgas ist.

Gleichfalls wird es im Rahmen dieser Ausführungsform der vorliegenden Erfindung bevorzugt, wenn das wärmedämmende Gas ausgewählt ist aus der Gruppe der Edelgase und Kohlenstoffdioxid sowie deren Mischungen.

In diesem Zusammenhang werden besonders gute Ergebnisse erhalten, wenn das wärmedämmende Gas ausgewählt ist aus der Gruppe bestehend aus Argon, Krypton, Xenon und Kohlenstoffdioxid sowie deren Mischungen, insbesondere Argon und Kohlenstoffdioxid sowie deren Mischungen. Besonders gute Ergebnisse werden dabei im Rahmen der vorliegenden Erfindung erhalten, wenn das wärmedämmende Gas Argon ist.

Im Rahmen dieser Ausführungsform der vorliegenden Erfindung ist es vorzugsweise vorgesehen, dass das Ausgangsmaterial in einer Prozessatmosphäre expandiert wird und/oder unmittelbar im Anschluss an die Expansion mit einer Prozessatmosphäre in Kontakt gebracht wird. Unter einer Prozessatmosphäre ist dabei im Rahmen der vorliegenden Erfindung die Gasphase und ihre spezielle Zusammensetzung zu verstehen, in welcher die Expansion durchgeführt wird.

Im Rahmen dieser Ausführungsform der vorliegenden Erfindung ist es gemäß dieser Ausführungsform vorgesehen, dass die Prozessatmosphäre, in welcher die Expansion durchgeführt wird, das wärmedämmende Gas enthält. Die Prozessatmosphäre muss dabei nicht vollständig aus dem wärmedämmenden Gas bestehen, sondern kann andere Gase enthalten, wie beispielsweise Verbrennungsabgase, welche aus der Beheizung eines Ofens stammen.

Im Allgemeinen wird es im Rahmen dieser Ausführungsform der vorliegenden Erfindung jedoch bevorzugt, wenn die Prozessatmosphäre das wärmedämmende Gas in Mengen von 50 bis 100 Vol.-%, insbesondere 70 bis 100 Vol.-%, vorzugsweise 80 bis 99 Vol.-%, bevorzugt 90 bis 99 Vol.-%, besonders bevorzugt 95 bis 99 Vol.-%, bezogen auf die Prozessatmosphäre, enthält.

Im Rahmen dieser Ausführungsform der vorliegenden Erfindung wird es somit bevorzugt, wenn die Prozessatmosphäre einen möglichst hohen Anteil an wärmedämmendem Gas aufweist, damit eine möglichst rasche und schnelle Einlagerung des wärmedämmenden Gases in die bei der Expansion gebildeten Poren vorgenommen werden kann.

Die zuvor genannten Anteile an wärmedämmendem Gas in der Prozessatmosphäre sind besonders bevorzugt, können jedoch in der Regel nur erreicht werden, wenn das Ausgansmaterial nicht mittels Verbrennungsabgasen, sondern beispielsweise durch elektrische Widerstandsheizungen oder durch Eintrag elektromagnetischer Strahlung erwärmt und expandiert wird.

Wenn die für die Expansion des Ausgangsmaterials benötigten Temperaturen mittels Verbrennungsabgasen erzeugt werden, so enthält die Prozessatmosphäre das wärmedämmende Gas üblicherweise in geringeren Anteilen, insbesondere enthält die Prozessatmosphäre das wärmedämmende Gas in Mengen von 40 bis 90 Vol.-%, insbesondere 60 bis 85 Vol.-%, vorzugsweise 70 bis 80 Vol.-%, bezogen auf die Prozessatmosphäre.

Im Rahmen dieser Ausführungsform der vorliegenden Erfindung kann es weiterhin auch vorgesehen sein, dass die Prozessatmosphäre keine homogene Verteilung des wärmedämmenden Gases aufweist, sondern vielmehr einen Konzentrationsgradienten des wärmedämmenden Gases. Dies ist insbesondere der Fall, wenn wie beispielsweise bei klassischen Öfen zur Expansion von Vermiculit und Perlit, der Ofen direkt mit Verbrennungsabgasen eines Brenners beheizt wird. Hier wird vorzugsweise im Gegenstromprinzip das wärmedämmende Gas entgegen der Arbeitsrichtung des Ofens eingeführt, so dass während und unmittelbar nach dem Inkontaktbringen der Ausgangsmaterialien mit den heißen Abgasen, ein Austausch von Verbrennungsgasen (Abgase) gegen das wärmedämmende Gas in der Prozessatmosphäre vollzogen wird. Auf diese Weise ist es möglich, einen Austausch der Verbrennungsabgase gegen wärmedämmendes Gas in der Prozessatmosphäre zu erzielen und so die Poren des expandierten bzw. expandierenden Materials mit dem wärmedämmenden Gas zu füllen.

Gemäß einer bevorzugten Ausbildung dieser Ausführungsform der vorliegenden Erfindung wird das expandierte Material, insbesondere die expandierten Partikel, getempert. Unter dem Begriff "Tempern" wird im Rahmen der vorliegenden Erfindung insbesondere verstanden, dass ein spezielles Temperaturregime, insbesondere bei erhöhter Temperatur und über einen längeren Zeitraum andauernd, angewandt wird.

Wenn im Rahmen der vorliegenden Erfindung das expandierte Material, insbesondere die expandierten Partikel getempert wird bzw. werden, so hat es sich bewährt, wenn das expandierte Material bei Temperaturen im Bereich von 500 bis 1.200 °C, insbesondere 600 bis 1.100 °C, vorzugsweise 700 bis 1.000 °C, bevorzugt 800 bis 900 °C, getempert wird.

Durch ein Tempern des expandierten Materials, insbesondere in den vorbezeichneten Temperaturbereichen, schließen sich - ohne sich auf diese Theorie festlegen zu wollen - die bei der Expansion des Ausgangsmaterials gebildeten Poren, welche zu einem hohen Anteil offene Poren sind, und schließen das wärmedämmende Gas ein.

Gemäß einer bevorzugten Ausbildung dieser Ausführungsform der vorliegenden Erfindung wird somit in einem auf einen Ersten Verfahrensschritt (a) der Expansion des Ausgangsmaterials (Expansionsverfahrensschritt) folgenden zweiten Verfahrensschritt (b) das expandierte Material getempert (Temperverfahrensschritt) getempert werden.

Besonders gute Ergebnisse werden in diesem Zusammenhang erhalten, wenn das erfindungsgemäße Verfahren derart durchgeführt wird, dass
(a) in einem ersten Verfahrensschritt (Expansionsverfahrensschritt)ein expandierfähiges mineralisches Ausgangsmaterial (Edukt) erwärmt, insbesondere auf Temperaturen im Bereich von 750 bis 1.300 °C, und expandiert wird, wobei das Ausgangsmaterial gleichzeitig oder nachfolgend zu der Erwärmung in eine Prozessatmosphäre eingebracht wird, welche mindestens ein wärmedämmenden Gas enthält, und
(b) gegebenenfalls in einem auf den ersten Verfahrensschritt (a) folgenden zweiten Verfahrensschritt (Temperverfahrensschritt) das im Verfahrensschritt (a) expandierte Material getempert wird, insbesondere bei Temperaturen im Bereich von 500 bis 1.200 °C.

Auf diese spezielle Ausgestaltung des Verfahrens zur Herstellung des porösen Materials lassen alle zuvor beschriebenen Merkmale und Ausbildungen des zuvor beschriebenen Verfahrens zur Herstellung poröser Materialien, welche ein wärmedämmendes Gas aufweisen, uneingeschränkt anwenden.

Im Rahmen dieser Ausführungsform der vorliegenden Erfindung kann es darüber hinaus auch vorgesehen sein, dass die expandierten Materialien, insbesondere die expandierten Partikel, in einen nachfolgenden Verfahrensschritt oberflächenmodifiziert, insbesondere hydrophobiert, werden. Dies erfolgt insbesondere in einem auf den ersten Verfahrensschritt der Expansion (Expansionsverfahrensschritt) (a) und auf den gegebenenfalls folgenden Verfahrensschritt des Temperns (Temperverfahrensschritt) (b) folgenden dritten Verfahrensschritt (c).

Im Rahmen dieser Ausführungsform der vorliegenden Erfindung hat es sich darüber hinaus bewährt, wenn die Oberflächenmodifizierung mittels Aerogelen, Phosphonaten, Sulfonaten, substituierten Aminen, Silanen, Polysiloxanen, Silikonaten, Carbonsäurederivaten, Ethoxylaten, Polyethern, Polyamiden und/oder deren Mischungen oder durch Gasphasenfluorierung erfolgt. Besonders gute Ergebnisse werden in diesem Zusammenhang erhalten, wenn die Oberflächenmodifizierung mittels Silanen, Silikonaten und Polysiloxanen, vorzugsweise Silanen und Silikonaten, und/oder deren Mischungen erfolgt. Vorzugsweise wird die Oberflächenmodifizierung als dünne Schicht, insbesondere als Monolage bzw. Monolayer, auf das expandierte Material, insbesondere die expandierten Partikel, aufgebracht wird.

Durch eine Oberflächenmodifizierung können insbesondere organische Reste an das mineralisch basierte Grundmaterial angeknüpft werden, wodurch eine gezielte Einstellung der Oberflächeneigenschaften möglich ist. Hierdurch kann einerseits eine Hydrophobierung der Oberfläche des erhaltenen Materials erzeugt werden, so dass die Wasserresorption des mineralisch basierten Materials deutlich reduziert ist. Andererseits können auch die Kompatibilität mit organischen Bindemittelsystemen gezielt eingestellt werden. Darüber hinaus kann durch eine Oberflächenmodifizierung auch die Staubentwicklung bei Schüttvorgängen deutlich verringert werden.

Weiterhin ermöglicht die Oberflächenmodifizierung eine gezielte Einstellung der Durchlässigkeit für das wärmedämmende Gas, d.h. in Abhängigkeit von dem verwendeten wärmedämmenden Gas bzw. Gasgemisch kann die Permeabilität des Dämmstoffes für das wärmedämmende Gas durch gezielte Auswahl der Oberflächenmodifizierung eingestellt und insbesondere weiter gesenkt werden. Durch eine Oberflächenmodifizierung wird somit zusätzlich gewährleistet, dass das in den Poren des Dämmstoffes eingeschlossene wärmedämmende Gas auch langfristig in den Poren verbleibt, so dass die guten Wärmedämmeigenschaften des Dämmstoffs erhalten bleiben.

Das erfindungsgemäße Verfahren wird nachfolgend anhand der Figurenbeschreibung in einer bevorzugten Ausführungsform in nicht beschränkender Weise erläutert.

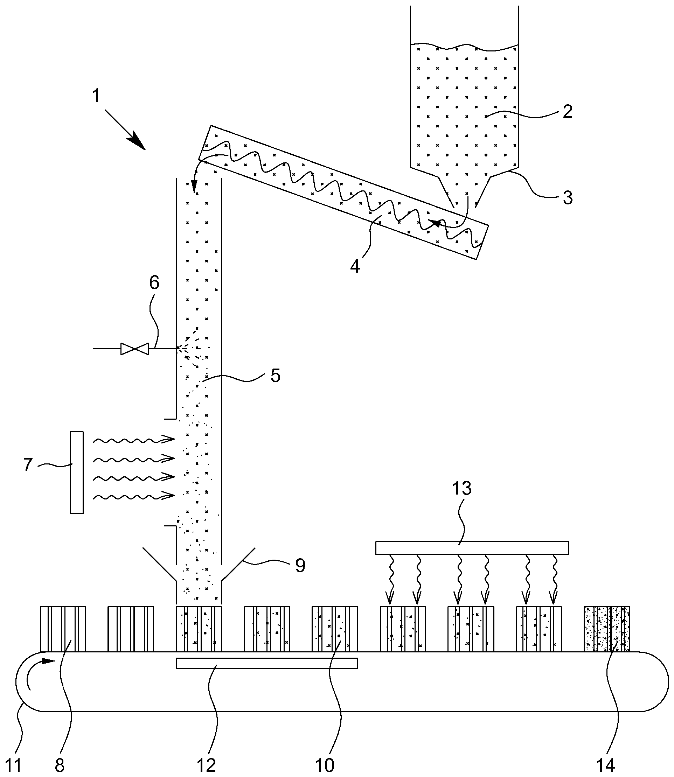

Es zeigt die einzige Figurendarstellung gemäß Fig. 1 eine Vorrichtung 1 zur Durchführung des erfindungsgemäßen Verfahrens.

Zur Durchführung des erfindungsgemäßen Verfahrens wird ein partikelförmiger Feststoff 2, welcher üblicherweise aus Füllstoffen und partikelförmigen Additiven besteht, in einem Lagerbehälter 3 vorgehalten. Bei den Füllstoffen handelt es sich vorzugsweise um wärmedämmende Füllstoffe, wie beispielsweise Perlit, Aerogel oder die zuvor beschriebenen modifizierten porösen Partikel, insbesondere auf Perlitbasis. Als Additive können insbesondere Härter und Hydrophobierungsmittel eingesetzt werden, welche die Eigenschaften der Füllmasse in der gewünschten Weise beeinflussen. Der partikelförmige Feststoff 2 kann aber auch beispielsweise Photoinitiatoren, welche die Vernetzungsreaktion eines Bindemittels initiieren bzw. beschleunigen, enthalten.

Aus der Bevorratungseinrichtung 3 wird der partikelförmige Feststoff 2 durch eine Transport- und Dosiereinrichtung 4, vorzugsweise in Form einer Förderschnecke, in einen Reaktor 5 transportiert. Bei dem in der Figurendarstellung dargestellten Reaktor 5 handelt es sich um einen Fallreaktor bzw. ein Fallrohr.

Der Reaktor 5 weist eine Dosier- und Eindüseinrichtung 6 zur Einbringung einer Lösung oder Dispersion eines Bindemittels in den Reaktor 5 auf. In den Reaktor 5 wird der partikelförmige Feststoff 2 mit der Lösung oder Dispersion des Bindemittels, insbesondere einer wässrigen Dispersion oder Lösung des Bindemittels, in Kontakt gebracht, so dass eine Füllmasse entsteht, welche vorzugsweise in Form eines Granulats vorliegt. Die einzelnen Bestandteile des partikelförmigen Feststoffs sind dabei üblicherweise nur teilweise benetzt sind, so dass die Füllmasse in Form eines Granulats vorliegt.

Die in der Figurendarstellung abgebildete Ausführungsform des Reaktors 5 in Form eines Fallreaktors ist eine erfindungsgemäß bevorzugte Ausführungsform, da sie auf besonders einfache und effiziente Weise eine reproduzierbare Darstellung der erfindungsgemäßen Füllmasse in kontinuierlicher Verfahrensführung ermöglicht.

Es ist jedoch auch möglich, dass der partikelförmige Feststoff durch Transporteinrichtungen, beispielsweise eine Förderschnecke oder ein Transportband, durch einen Reaktor 5 transportiert wird und während des Transportes durch den Reaktor 5 mit der Lösung oder Dispersion des Bindemittels in Kontakt gebracht wird. Gleichfalls ist es auch möglich, dass die Füllmasse nicht kontinuierlich hergestellt wird, sondern batchweise, beispielsweise mit Trommelmischern.

Die Lösung oder Dispersion des Bindemittels kann weiterhin Additive, wie beispielsweise Hydrophobierungsmittel oder Härter, und Photoinitiatoren aufweisen. Die Verteilung von Additiven in dem partikelförmigen Feststoff 2 sowie der Lösung und Dispersion des Bindemittels hängt von den jeweiligen Eigenschaften des Additivs sowie der herzustellenden Füllmasse ab und wird vom Fachmann jeweils in Abhängigkeit von den Anforderungen ausgewählt. Wichtig ist jedoch, dass die resultierende Füllmasse mindestens einen Photoinitiator aufweist.

Nachdem im Reaktor 5 der partikelförmige Feststoff 2 mit der Lösung oder Dispersion des Bindemittels in Kontakt gebracht worden ist, wird anschließend der Photoinitiator aktiviert, so dass die Vernetzungsreaktion des Bindemittels initiiert bzw. beschleunigt wird. In der Figurendarstellung ist eine Aktivierung eines Photoinitiators mittels elektromagnetischer Strahlung, insbesondere im IR-Bereich oder im UV/VIS-Bereich, durch eine Einrichtung 7 zur Aktivierung des Photoinitiators, insbesondere einen IR- und/oder UV/VIS-Strahler, dargestellt, da die Aktivierung mittels elektromagnetischer Strahlung besonders rasch erfolgt.

Die Füllmasse mit dem aktivierten Photoinitiator wird anschließend in die Hohlräume von Formkörpern 8 eingebracht, insbesondere über eine Befüllungseinrichtung 9.

Die Formkörper werden während des erfindungsgemäßen Verfahrens vorzugsweise mit Hilfe einer Transporteinrichtung 11 zu den unterschiedlichen Stationen gebracht. Insbesondere transportiert die Transporteinrichtung 11 die Formkörper 8, insbesondere die Loch- bzw. Hohlziegel, aus dem Brennofen zu der nicht erfindungsgemäßen Vorrichtung 1.

Wenn im Rahmen der vorliegenden Erfindung Loch- bzw. Hohlziegel als Formkörper verwendet werden, so weisen diese bei Befüllung mit der erfindungsgemäßen Füllmasse durch die Befüllungseinrichtung 9 üblicherweise noch Temperaturen im Bereich von 100 bis 300°C auf.

Von der Befüllungseinrichtung 9 werden die nun befüllten Formkörper 10 zu einer Verdichtungseinrichtung 12, insbesondere einer Rüttelplatte, transportiert. Hierbei wird die Füllmasse in den Hohlräumen der Formkörper 10 soweit verdichtet, dass dichte Kugelpackungen der Füllstoffe gebildet werden, was in deutlich verbesserten Wärmedämmeigenschaften der gefüllten Formkörper resultiert.

Anschließend werden die mit der verdichteten Füllmasse gefüllten Formkörper 10 zu einer weiteren Einrichtung 13 zur Aktivierung des Initiators, insbesondere einem IR- oder UV/VIS-Strahler, transportiert und der Photoinitiator dort nochmals aktiviert. Eine nochmalige Aktivierung des Photoinitiators führt dazu, dass die Vernetzungsreaktion des Bindemittels zumindest an der Oberfläche der Füllmasse weitgehend abgeschlossen ist, so dass die dann gefüllten und gehärteten Formkörper 14 problemlos gelagert und gestapelt werden können, ohne dass die Füllmasse aus den Hohlräumen der Formkörper heraustropft oder -fällt bzw. ohne dass die Formkörper 14 miteinander bei der Lagerung verblocken.

### Bezugszeichenliste

- 1: Vorrichtung
- 2: partikelförmiger Feststoff
- 3: Lagerbehälter
- 4: Transport- und Dosiereinrichtung
- 5: Reaktor
- 6: Dosier- und Eindüseinrichtung
- 7: Einrichtung zur Aktivierung des Photoinitiators
- 8: Formkörper
- 9: Befüllungseinrichtung
- 10: befüllter Formkörper
- 11: Transporteinrichtung
- 12: Verdichtungseinrichtung
- 13: weitere Einrichtung zur Aktivierung des Photoinitiators
- 14: befüllte und gehärtete Formkörper

## Patentansprüche

1. Verfahren zum Befüllen von Hohlräumen, insbesondere zum Befüllen der Hohlräume von Formkörpern, mit einer Füllmasse, insbesondere einer Dämmmasse, aufweisend mindestens ein Bindemittel,
**dadurch gekennzeichnet,**
**dass** das Bindemittel ausgewählt ist aus organisch basierten Bindemitteln und Mischungen aus anorganisch basierten Bindemitteln und organisch basierten Bindemitteln, dass die Füllmasse mindestens einen Photoinitiator zur Initiierung und/oder Beschleunigung einer Vernetzungsreaktion des organisch basierten Bindemittels aufweist und dass der Photoinitiator unmittelbar vor Einbringen der Füllmasse in die Hohlräume, insbesondere in die Hohlräume eines Formkörpers, durch Einwirkung elektromagnetischer Strahlung aktiviert wird.

2. Verfahren nach Anspruch 1, **dadurch gekennzeichnet, dass** die Füllmasse den Photoinitiator in Mengen von 0,01 bis 5 Gew.-%, insbesondere 0,1 bis 4 Gew.-%, vorzugsweise 0,5 bis 3 Gew.-%, bevorzugt 1 bis 2 Gew.-%, bezogen auf die Füllmasse, enthält.

3. Verfahren nach Anspruch 1 oder 2, **dadurch gekennzeichnet, dass** das anorganisch basierte Bindemittel ausgewählt ist aus der Gruppe der mineralischen und/oder siliciumbasierten Bindemitteln, vorzugsweise der siliciumbasierten Bindemitteln.

4. Verfahren nach einem der vorangehenden Ansprüche, **dadurch gekennzeichnet, dass** das organisch basierte Bindemittel ausgewählt ist aus Acrylaten, Methacrylaten, Polyurethanen, Harnstoff-Formaldehydharz-Harzen, Melamin-Harzen, Epoxidharzen, Polyethern, Polyestern und deren Mischungen.

5. Verfahren nach einem der vorangehenden Ansprüche, **dadurch gekennzeichnet, dass** die Füllmasse das Bindemittel in Mengen von 1 bis 40 Gew.-%, insbesondere 5 bis 30 Gew.-%, vorzugsweise 8 bis 20 Gew.-%, bevorzugt 10 bis 15 Gew.-%, bezogen auf die Füllmasse, enthält.

6. Verfahren nach einem der vorangehenden Ansprüche, **dadurch gekennzeichnet, dass** die Füllmasse mindestens einen partikelförmigen Füllstoff, vorzugsweise poröse Partikel, enthält, insbesondere wobei die Füllmasse den partikelförmigen Füllstoff in Mengen von 40 bis 99 Gew.-%, insbesondere 50 bis 90 Gew-%, vorzugsweise 55 bis 80 Gew.-%, bevorzugt 60 bis 70 Gew.-%, bezogen auf die Füllmasse, enthält.

7. Verfahren nach einem der vorangehenden Ansprüche, **dadurch gekennzeichnet, dass** das die Füllmasse in Form eines Granulats vorliegt.

8. Verfahren nach einem der vorangehenden Ansprüche, **dadurch gekennzeichnet, dass** die Füllmasse mindestens ein Löse- oder Dispersionsmittel aufweist, insbesondere wobei die Füllmasse das Löse- oder Dispersionsmittel in Mengen von 1 bis 30 Gew.-%, insbesondere 2 bis 20 Gew.-%, vorzugsweise 5 bis 15 Gew.-%, bevorzugt 7 bis 12 Gew.-%, bezogen auf die Füllmasse, enthält.

9. Verfahren nach einem der vorangehenden Ansprüche, **dadurch gekennzeichnet, dass** die Füllmasse Additive enthält, insbesondere in Mengen von 0,1 bis 20 Gew.-%, insbesondere 0,5 bis 10 Gew.-%, vorzugsweise 1 bis 8 Gew.-%, bevorzugt 1 bis 5 Gew.-%, bezogen auf die Füllmasse.

10. Verfahren nach einem der vorangehenden Ansprüche, **dadurch gekennzeichnet, dass** die Füllmasse durch Inkontaktbringen eines partikelförmigen Feststoffs, insbesondere einer Trockenmischung, mit einer Lösung oder Dispersion des Bindemittels hergestellt wird.

11. Verfahren nach einem der vorangehenden Ansprüche,
**dadurch gekennzeichnet,**
**dass**
(a) in einem ersten Verfahrensschritt ein partikelförmiger Feststoff, insbesondere eine Trockenmischung, mit einer Lösung oder Dispersion eines Bindemittels, wobei das Bindemittel ausgewählt ist aus organisch basierten Bindemitteln und Mischungen aus anorganisch basierten Bindemitteln und organisch basierten Bindemitteln, in Kontakt gebracht wird, so dass eine Füllmasse erhalten wird, wobei der partikelförmige Feststoff und/oder die Lösung oder Dispersion des Bindemittels mindestens einen Photoinitiator aufweist,
(b) in einem auf den ersten Verfahrensschritt (a) folgenden zweiten Verfahrensschritt der Photoinitiator durch Einwirkung elektromagnetischer Strahlung aktiviert wird, wodurch eine Vernetzungsreaktion des organisch basierten Bindemittels initiiert und/oder beschleunigt wird, und
(c) in einem auf den zweiten Verfahrensschritt (b) folgenden dritten Verfahrensschritt die Füllmasse in einen Hohlraum, insbesondere in den Hohlraum eines Formkörpers, eingebracht wird.

12. Verfahren nach Anspruch 10 oder 11, **dadurch gekennzeichnet, dass** der partikelförmiger Feststoff, insbesondere in Verfahrensschritt (a), mit der Lösung oder Dispersion des Bindemittels besprüht wird.

13. Verfahren nach einem der Ansprüche 10 bis 12, **dadurch gekennzeichnet, dass**, ein gewichtsbezogenes Verhältnis von partikelförmigem Feststoff zu Feststoffanteil der Lösung oder Dispersion des Bindemittels, insbesondere in Verfahrensschritt (a) im Bereich von 1 : 5 bis 15 : 1, insbesondere 1 : 1 bis 10 : 1, vorzugsweise 3 : 1 bis 8 : 1, bevorzugt 5 : 1 bis 6 : 1, eingestellt wird.

14. Verfahren nach einem der vorangehenden Ansprüche, **dadurch gekennzeichnet, dass** nach der Einbringung der Füllmasse in den Hohlraum, insbesondere in Verfahrensschritt (c), die Füllmasse in dem Hohlraum verdichtet wird, insbesondere durch Pressen und/oder durch Vibration, vorzugsweise durch Vibration.

## Claims

1. Method for filling cavities, in particular for filling the cavities of molded bodies, with a filling mass, in particular an insulating mass, comprising at least one binding agent,
**characterized in that**
the binding agent is selected from organically based binding agents and mixtures of inorganically based binding agents and organically based binding agents, **in that** the filling mass comprises at least one photo initiator for initiating and/or accelerating a crosslinking reaction of the organically based binding agent, and **in that** the photo initiator is activated by the action of electromagnetic radiation immediately before the filling mass is introduced into the cavities, in particular into the cavities of a molded body.

2. Method according to claim 1, **characterized in that** the filling mass contains the photoinitiator in amounts of 0.01 to 5 wt.%, in particular 0.1 to 4 wt.%, preferably 0.5 to 3 wt.%, more preferably 1 to 2 wt.%, based on the filling mass.

3. Method according to claim 1 or 2, **characterized in that** the inorganically based binding agent is selected from the group of mineral and/or silicon-based binding agents, preferably silicon-based binding agents.

4. Method according to any of the preceding claims, **characterized in that** the organically based binding agent is selected from acrylates, methacrylates, polyurethanes, ureaformaldehyde resins, melamine resins, epoxy resins, polyethers, polyesters and mixtures thereof.

5. Method according to any of the preceding claims, **characterized in that** the filling mass contains the binding agent in amounts of 1 to 40 wt.%, in particular 5 to 30 wt.%, preferably 8 to 20 wt.%, more preferably 10 to 15 wt.%, based on the filling mass.

6. Method according to any of the preceding claims, **characterized in that** the filling mass contains at least one particulate filler, preferably porous particles, in particular wherein the filling mass contains the particulate filler in amounts of 40 to 99 wt.%, in particular 50 to 90 wt.%, preferably 55 to 80 wt.%, more preferably 60 to 70 wt.%, based on the filling mass.

7. Method according to any of the preceding claims, **characterized in that** the filling mass is present in the form of granules.

8. Method according to any of the preceding claims, **characterized in that** the filling mass comprises at least one solvent or dispersant, in particular wherein the filling mass comprises the solvent or dispersant in amounts of 1 to 30 wt.%, in particular 2 to 20 wt.%, preferably 5 to 15 wt.%, more preferably 7 to 12 wt.%, based on the filling mass.

9. Method according to any of the preceding claims, **characterized in that** the filling mass contains additives, in particular in amounts of 0.1 to 20 wt.%, in particular 0.5 to 10 wt.%, preferably 1 to 8 wt.%, more preferably 1 to 5 wt.%, based on the filling mass.

10. Method according to any of the preceding claims, **characterized in that** the filling mass is prepared by bringing a particulate solid, in particular a dry mixture, into contact with a solution or dispersion of the binding agent.

11. Method according to any of the preceding claims,
**characterized in that**
(a) in a first method step, a particulate solid, in particular a dry mixture, is brought into contact with a solution or dispersion of a binding agent, wherein the binding agent is selected from organically based binding agents and mixtures of inorganically based binding agents and organically based binding agents, so that a filling mass is obtained, wherein the particulate solid and/or the solution or dispersion of the binding agent comprises at least one photo initiator,
(b) in a second method step following the first method step (a), the photo initiator is activated by the action of electromagnetic radiation, thereby initiating and/or accelerating a crosslinking reaction of the organically based binding agent, and
(c) in a third method step following the second method step (b), the filling mass is introduced into a cavity, in particular into the cavity of a molded body.

12. Method according to claim 10 or 11, **characterized in that** the particulate solid, in particular in method step (a), is sprayed with the solution or dispersion of the binding agent.

13. Method according to one of claims 10 to 12, **characterized in that**, a weight-related ratio of particulate solid to solid fraction of the solution or dispersion of the binding agent, in particular in method step (a), is set in the range from 1 : 5 to 15 : 1, in particular 1 : 1 to 10 : 1, preferably 3 : 1 to 8 : 1, more preferably 5 : 1 to 6 : 1.

14. Method according to any of the preceding claims, **characterized in that** after introducing the filling mass into the cavity, in particular in method step (c), the filling mass is compacted in the cavity, in particular by pressing and/or by vibration, preferably by vibration.

## Revendications

1. Procédé de remplissage de cavités, en particulier de remplissage des cavités de corps moulés, avec une matière de remplissage, en particulier une matière isolante, comprenant au moins un liant,
**caractérisé en ce**
**que** le liant est choisi parmi les liants à base organique et les mélanges de liants à base inorganique et de liants à base organique, **en ce que** la matière de remplissage comporte au moins un photo-initiateur pour initier et/ou accélérer une réaction de réticulation du liant à base organique et **en ce que** le photo-initiateur est activé immédiatement avant que la matière de remplissage ne soit introduite dans les cavités, notamment dans les cavités d'un corps moulé, par l'action d'un rayonnement électromagnétique.

2. Procédé selon la revendication 1, **caractérisé en ce que** la matière de remplissage contient le photo-initiateur en des quantités allant de 0,01 à 5 % en poids, en particulier de 0,1 à 4 % en poids, de préférence de 0,5 à 3 % en poids, préférentiellement de 1 à 2 % en poids, rapporté à la matière de remplissage.

3. Procédé selon la revendication 1 ou 2, **caractérisé en ce que** le liant à base inorganique est choisi dans le groupe des liants minéraux et/ou à base de silicium, de préférence des liants à base de silicium.

4. Procédé selon l'une des revendications précédentes, **caractérisé en ce que** le liant à base organique est choisi parmi les acrylates, les méthacrylates, les polyuréthanes, les résines de résine urée-formaldéhyde, les résines de mélamine, les résines époxy, les polyéthers, les polyesters et leurs mélanges.

5. Procédé selon l'une quelconque des revendications précédentes, **caractérisé en ce que** la matière de remplissage contient le liant en des quantités allant de 1 à 40 % en poids, en particulier de 5 à 30 % en poids, préférentiellement de 8 à 20 % en poids, de préférence de 10 à 15 % en poids, rapporté à la matière de remplissage.

6. Procédé selon l'une des revendications précédentes, **caractérisé en ce que** la matière de remplissage contient au moins une charge particulaire, de préférence des particules poreuses, en particulier la matière de remplissage contenant la charge particulaire en des quantités de 40 à 99 % en poids, en particulier 50 à 90 % en poids, de préférence 55 à 80 % en poids, de préférence de 60 à 70 % en poids, rapporté à la matière de remplissage.

7. Procédé selon l'une des revendications précédentes, **caractérisé en ce que** la matière de remplissage se présente sous forme de granulés.

8. Procédé selon l'une des revendications précédentes, **caractérisé en ce que** la matière de remplissage comporte au moins un solvant ou agent de dispersion, en particulier la matière de remplissage contenant le solvant ou l'agent de dispersion en des quantités de 1 à 30 % en poids, en particulier 2 à 20 % en poids, de préférence 5 à 15 % en poids, préférentiellement de 7 à 12 % en poids, rapporté à la matière de remplissage.

9. Procédé selon l'une quelconque des revendications précédentes, **caractérisé en ce que** la matière de remplissage contient des additifs, en particulier dans des quantités allant de 0,1 à 20 % en poids, notamment de 0,5 à 10 % en poids, préférentiellement de 1 à 8 % en poids, de préférence de 1 à 5 % en poids, rapporté à la matière de remplissage.

10. Procédé selon l'une des revendications précédentes, **caractérisé en ce que** la matière de remplissage est produite par mise en contact d'un solide particulaire, en particulier un mélange sec, avec une solution ou une dispersion du liant.

11. Procédé selon l'une des revendications précédentes,
**caractérisé en ce**
**que**
(a) dans une première étape du procédé, un solide particulaire, en particulier un mélange sec, est mis en contact avec une solution ou une dispersion d'un liant, le liant étant choisi parmi les liants à base organique et les mélanges de liants à base inorganique et de liants à base organique, afin d'obtenir une matière de remplissage, le solide particulaire et/ou la solution ou la dispersion du liant comportant au moins un photo-initiateur,
(b) dans une deuxième étape de procédé suivant la première étape de procédé (a), le photo-initiateur est activé par l'action d'un rayonnement électromagnétique, moyennant quoi une réaction de réticulation du liant à base organique est initiée et/ou accélérée, et
(c) dans une troisième étape de procédé suivant la deuxième étape de procédé (b), la matière de remplissage est introduite dans une cavité, en particulier dans la cavité d'un corps moulé.

12. Procédé selon la revendication 10 ou 11, **caractérisé en ce que** le solide particulaire, en particulier dans l'étape de procédé (a), est pulvérisé avec la solution ou la dispersion du liant.

13. Procédé selon l'une des revendications 10 à 12, **caractérisé en ce qu'**un rapport pondéral du solide particulaire à la proportion de solides dans la solution ou la dispersion du liant, en particulier dans l'étape de procédé (a), est réglé dans la plage allant de de 1 : 5 à 15 :1, en particulier de 1 : 1 à 10 : 1, de préférence de 3 :1 à 8 : 1, préférentiellement de 5 : 1 à 6 :1.

14. Procédé selon l'une des revendications précédentes, **caractérisé en ce qu'**après introduction de la matière de remplissage dans la cavité, en particulier à l'étape du procédé (c), la matière de remplissage est compactée dans la cavité, notamment par pressage et/ou par vibration, de préférence par vibration.
